# EUROPÄISCHE PATENTSCHRIFT

(11) **EP 3 774 246 B1**
(45) Veröffentlichungstag und Bekanntmachung des Hinweises auf die Patenterteilung: **18.08.2021**
(21) Anmeldenummer: 19709721.5
(22) Anmeldetag: 08.03.2019
(51) Int. Cl.: B28B 1/00, B28B 7/46, B29C 64/00, B29C 64/165, B29C 64/343, B33Y 10/00, B33Y 30/00, B33Y 40/00

(54) **VORRICHTUNG ZUR HERSTELLUNG WENIGSTENS EINES DREIDIMENSIONALEN BAUTEILS FÜR DIE BAUINDUSTRIE**
DEVICE FOR PRODUCING AT LEAST ONE THREE-DIMENSIONAL COMPONENT FOR THE CONSTRUCTION INDUSTRY
DISPOSITIF DE FABRICATION D'AU MOINS UN MODULE TRIDIMENSIONNEL POUR L'INDUSTRIE DU BÂTIMENT

(30) Priorität: 10.04.2018 AT 502952018
(43) Veröffentlichungstag der Anmeldung: 17.02.2021
(73) Patentinhaber: Progress Maschinen & Automation AG, 39042 Brixen (IT)
(72) Erfinder: RAST, André Georges, 39042 St. Andrä (IT); STOFNER, Helmut, 39058 Sarntal (IT)
(74) Vertreter: Torggler & Hofinger Patentanwälte
(86) Internationale Anmeldenummer: PCT/EP2019/055889
(87) Internationale Veröffentlichungsnummer: WO 2019/197088

(56) Entgegenhaltungen:
- WO-A1-2017/087623
- GB-A- 2 030 507
- US-A- 2 209 366
- US-A1- 2005 280 185
- US-A1- 2014 044 872

## Beschreibung

Die Erfindung betrifft eine Vorrichtung gemäß dem Oberbegriff des Anspruchs 1. Die Erfindung betrifft weiterhin ein Verfahren zur Auftragung von wenigstens einem Partikelmaterial auf einer Druckplattform in einer solchen Vorrichtung sowie die Verwendung einer Dosierwalze zur Auftragung von wenigstens einem Partikelmaterial auf einer Druckplattform in einer solchen Vorrichtung.

Vorrichtungen gemäß dem Oberbegriff des Anspruchs 1 sind aus dem Stand der Technik bekannt. Dabei tritt häufig das Problem auf, dass das wenigstens eine Partikelmaterial ungleichmäßig aufgetragen wird. Außerdem kann es im Falle Partikelmaterialien, welche aus verschiedenen Komponenten zusammengemischt sind, zu einer Entmischung der Komponenten bei der Auftragung kommen.

Eine gattungsgemäße Vorrichtung ist aus der Schrift US 2005/280185 A1 bekannt, über welche Partikelmaterial schichtweise auf eine Druckplattform aufgetragen werden kann. Während der Auftragung des Partikelmaterials wird ein Mischelement genutzt, um eine Entmischung von Komponenten des Partikelmaterials zu reduzieren. Vorrichtungen zum Materialauftrag sind aus der Schrift US 2014/044872 A1 sowie der Schrift WO 2017/087623 A1 bekannt, wobei Partikelmaterial über eine Dosiervorrichtung auf ein Förderband aufgetragen wird.

Die Aufgabe der vorliegenden Erfindung besteht darin, eine gegenüber dem Stand der Technik verbesserte Vorrichtung zur Herstellung wenigstens eines dreidimensionalen Bauteils für die Bauindustrie anzugeben, welche insbesondere einen gleichmäßigeren Materialauftrag ermöglicht und bei welcher im Falle von Partikelmaterialien, welche aus verschiedenen Komponenten zusammengemischt sind, eine Entmischung der Komponenten vermieden werden kann, ein gegenüber dem Stand der Technik verbessertes Verfahren zur Auftragung von wenigstens einem Partikelmaterial auf einer Druckplattform in einer derart verbesserten Vorrichtung anzugeben.

Diese Aufgabe wird gelöst durch die Merkmale der unabhängigen Ansprüche 1 und 14.

Es ist also erfindungsgemäß vorgesehen, dass die wenigstens eine Materialauftragsvorrichtung wenigstens eine Dosierwalze umfasst, über welche das wenigstens eine Partikelmaterial auf der Druckplattform auftragbar ist, wobei wenigstens eine, vorzugsweise mechanische, Entnahmevorrichtung vorgesehen ist, mit welcher das wenigstens eine von der wenigstens einen Dosierwalze aufgenommene Partikelmaterial dosiert der wenigstens einen Dosierwalze entnehmbar ist.

Durch die Verwendung wenigstens einer Dosierwalze kann sehr genau die Menge des wenigstens einen Partikelmaterials, welches von der wenigstens einen Dosierwalze aufgenommen wird, kontrolliert werden. Weiterhin ist es möglich, das von der wenigstens einen Dosierwalze aufgenommene Partikelmaterial sehr kontrolliert auf der Druckplattform abzulegen.

Im Falle von Partikelmaterialien, welche aus verschiedenen Komponenten zusammengemischt sind, ist eine Entmischung der Komponenten ausgeschlossen, da das wenigstens eine Partikelmaterial homogen und gleichmäßig auf die Druckplattform bzw. die Arbeitsebene rieselt.

Winkelgeschwindigkeit, Walzenradius sowie Formgestaltung der Walzenoberfläche bestimmen die Ausbringungsmenge des wenigstens einen Partikelmaterials und somit die Schichtdicke der einzelnen Schichten. Die wenigstens eine Dosierwalze erfüllt somit zwei Funktionen: sie dient als Fördereinrichtung um das wenigstens eine Partikelmaterial vom Aufgabetrog zur Arbeitsebene zu transportieren und als Dosiereinrichtung, um genau definierte Partikelmaterialmengen auszubringen.

Erfindungsgemäß ist wenigstens eine, vorzugsweise mechanische, Entnahmevorrichtung vorgesehen, mit welcher das wenigstens eine von der wenigstens einen Dosierwalze aufgenommene Partikelmaterial dosiert der wenigstens einen Dosierwalze entnehmbar ist. Dadurch kann die Auftragung des wenigstens einen Partikelmaterials auf der Druckplattform noch kontrollierter und gleichmäßiger erfolgen. Außerdem kann eine unerwünschte Anhaftung von Restmaterial an der wenigstens einen Dosierwalze vermieden werden. Und schließlich können auch etwaige Klümpchen, welche sich im Aufgabetrog gebildet haben, zerteilt werden.

Weitere bevorzugte Ausführungsformen der Erfindung sind in den abhängigen Ansprüchen definiert.

Weitere Einzelheiten und Vorteile der Erfindung werden anhand der Figurenbeschreibung unter Bezugnahme auf die Zeichnungen im Folgenden näher erläutert. Darin zeigen:
- Fig. 1a): eine Vorrichtung zur Herstellung wenigstens eines dreidimensionalen Bauteils, umfassend einen Saugförderer in einer schematischen Seitenansicht,
- Fig. 1b): eine Vorrichtung zur Herstellung wenigstens eines dreidimensionalen Bauteils, umfassend einen Saugförderer in einer schematischen Draufsicht,
- Fig. 1c): einen Saugförderer in einer schematischen Querschnittsansicht,
- Fig. 2: eine Materialweiche in einer schematischen Querschnittsansicht,
- Fig. 3a)-c): eine 6-fach-Materialweiche in einer schematischen Rück- (Fig. 3a)), Seiten- (Fig. 3b)) und Vorderansicht (Fig. 3c)),
- Fig. 4: eine Energiekette in einer schematischen perspektivischen Ansicht,
- Fig. 5a): eine Vorrichtung zur Herstellung wenigstens eines dreidimensionalen Bauteils, umfassend einen Druckförderer in einer schematischen Seitenansicht,
- Fig. 5b): eine Vorrichtung zur Herstellung wenigstens eines dreidimensionalen Bauteils, umfassend einen Druckförderer in einer schematischen Draufsicht,
- Fig. 5c): einen Druckförderer in einer schematischen Querschnittsansicht,
- Fig. 6a): eine Vorrichtung zur Herstellung wenigstens eines dreidimensionalen Bauteils, umfassend einen Schnecken- oder Spiralförderer in einer schematischen Seitenansicht,
- Fig. 6b): eine Vorrichtung zur Herstellung wenigstens eines dreidimensionalen Bauteils, umfassend einen Schnecken- oder Spiralförderer in einer schematischen Draufsicht,
- Fig. 7a): eine Vorrichtung zur Herstellung wenigstens eines dreidimensionalen Bauteils, umfassend einen Bandförderer in einer schematischen Seitenansicht,
- Fig. 7b): eine Vorrichtung zur Herstellung wenigstens eines dreidimensionalen Bauteils, umfassend einen Bandförderer in einer schematischen Draufsicht,
- Fig. 8a): einen Ausschnitt einer Materialauftragsvorrichtung mit einer Dosierwalze und einer oszillierbaren Entnahmevorrichtung in einer schematischen Querschnittsansicht,
- Fig. 8b), c): Ausschnitte einer Materialauftragsvorrichtung mit einer Dosierwalze und einer rotierbaren Entnahmevorrichtung in einer schematischen Querschnittsansicht,
- Fig. 8d): einen Ausschnitt einer Materialauftragsvorrichtung mit zwei hintereinander angeordneten Dosierwalzen in einer schematischen Querschnittsansicht,
- Fig. 9a), b): einen Druckkopf in Kombination mit einer Materialauftragsvorrichtung und einem Saugförderer in einer ersten schematischen Querschnittsansicht und in einer zweiten schematischen Querschnittsansicht entlang der Schnittebene 94,
- Fig. 10a), b): einen Druckkopf in Kombination mit einer Materialauftragsvorrichtung und einem Druckförderer in einer ersten schematischen Querschnittsansicht und in einer zweiten schematischen Querschnittsansicht entlang der Schnittebene 95,
- Fig. 11a): einen Druckkopf in Kombination mit einer Materialauftragsvorrichtung, umfassend eine Trennwand in Längsrichtung und eine Untermischwalze, in einer schematischen Querschnittsansicht,
- Fig. 11b): einen Druckkopf in Kombination mit einer Materialauftragsvorrichtung, umfassend zwei Aufgabetröge mit jeweils einer Dosierwalze, in einer schematischen Querschnittsansicht,
- Fig. 11c): eine Vorrichtung, gebildet aus den in Fig. 9a) und Fig. 11b) dargestellten Vorrichtungen,
- Fig. 11d): eine Vorrichtung, umfassend vier Druckköpfe und vier Materialauftragsvorrichtungen mit jeweils einem Saugförderer und einer Dosierwalze, in einer schematischen Querschnittsansicht,
- Fig. 12a)-c): einen Druckkopf in Kombination mit einer Materialauftragsvorrichtung, umfassend mehrere Trennwände in Querrichtung, und einem Saugförderer in einer ersten schematischen Querschnittsansicht (Fig. 12a)), in einer zweiten schematischen Querschnittsansicht entlang der Schnittebene 94 (Fig. 12b) und in einer schematischen Draufsicht (Fig. 12c)),
- Fig. 12d): eine Trennwand mit elektromagnetischen Befestigungsvorrichtungen in einer schematischen Seitenansicht,
- Fig. 12e), f): eine Trennwand, welche an einer rohrförmigen Führung verstellbar ist, in einer schematischen Seitenansicht und in einer schematischen Querschnittsansicht entlang der Schnittebene 100, und
- Fig. 13a)-c): einen Druckkopf in Kombination mit einer Materialauftragsvorrichtung, umfassend mehrere über einen Antrieb verstellbare Trennwände in Querrichtung, und einem Saugförderer in einer ersten schematischen Querschnittsansicht (Fig. 13a)), in einer zweiten schematischen Querschnittsansicht entlang der Schnittebene 94 (Fig. 13b) und in einer schematischen Draufsicht (Fig. 13c)).

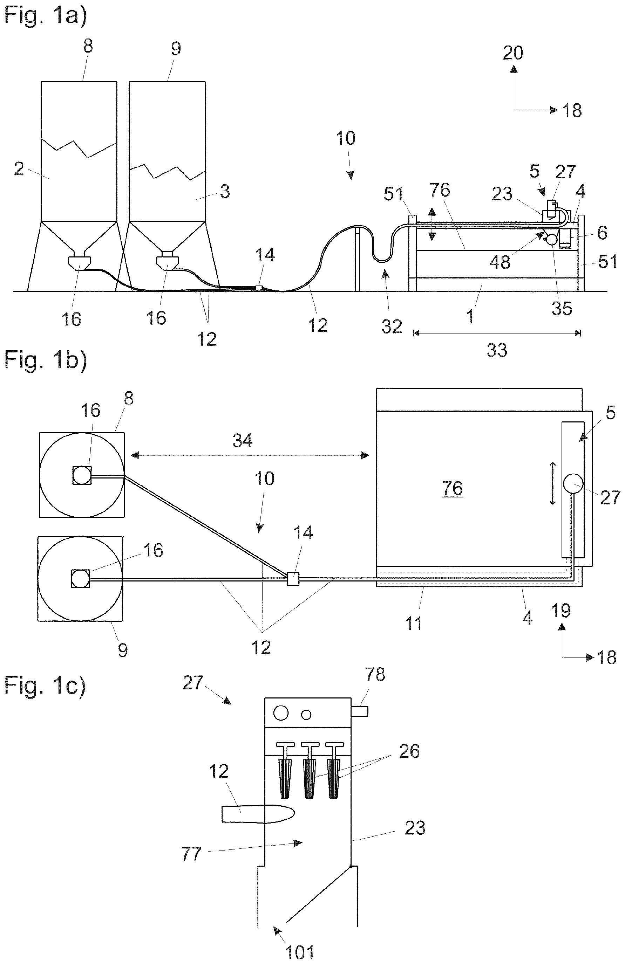

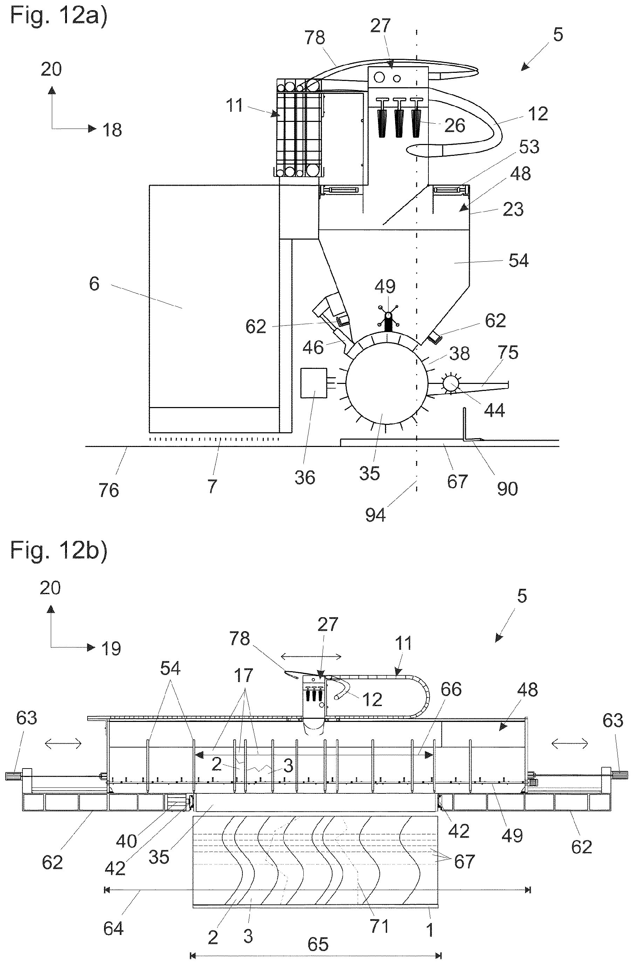

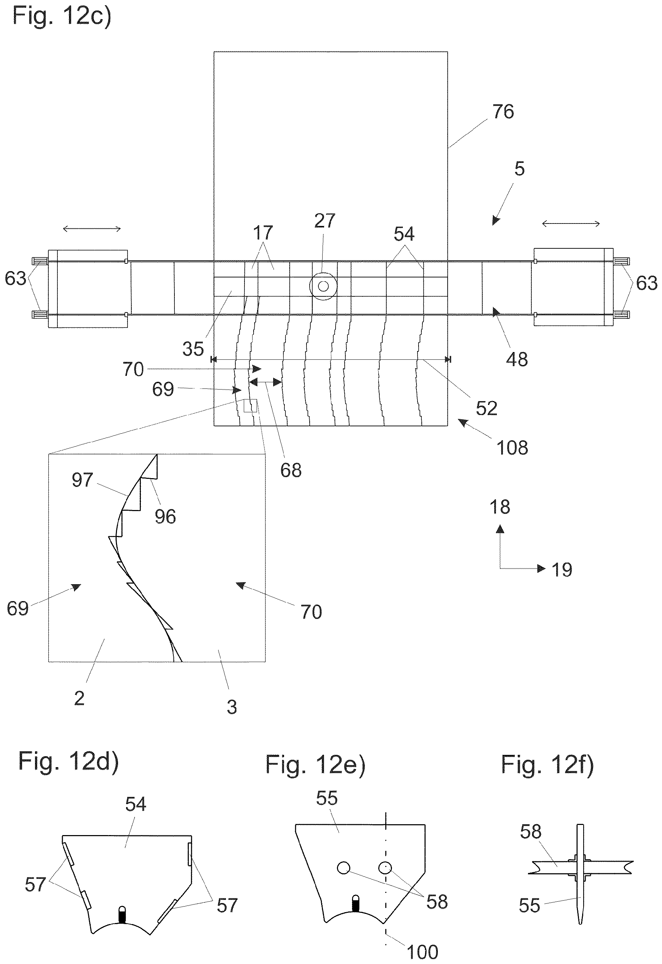

Die Figuren 1a) und b), 5a) und 5b), 6a) und 6b) sowie 7a) und 7b) zeigen allesamt jeweils eine Vorrichtung zur Herstellung wenigstens eines dreidimensionalen Bauteils 71 für die Bauindustrie aus einer Mehrzahl von auf einer Druckplattform 1 übereinander angeordneter Schichten 67 (vergleiche auch z.B. Figur 12b)) aus wenigstens einem Partikelmaterial 2, 3, die in örtlich vorbestimmten Bereichen verfestigt und miteinander zum wenigstens einen dreidimensionalen Bauteil 71 verbunden sind. Die Vorrichtung umfasst einen Druckrahmen 4, an welchem wenigstens eine Materialauftragsvorrichtung 5 zur schichtweisen Auftragung des wenigstens einen Partikelmaterials 2, 3 auf der Druckplattform 1 und wenigstens ein Druckkopf 6 zur Abgabe wenigstens eines Bindemittels 7 an den örtlich vorbestimmten Bereichen bewegbar gelagert sind. Es sind wenigstens ein Vorratsbehälter 8, 9, 72 zur Bevorratung des wenigstens einen Partikelmaterials 2, 3 und eine Fördervorrichtung 10 zum Fördern des wenigstens einen Partikelmaterials 2, 3 vom wenigstens einen Vorratsbehälter 8, 9, 72 zur wenigstens einen Materialauftragsvorrichtung 5 vorgesehen, wobei die Fördervorrichtung 10 derart ausgebildet und mit dem wenigstens einen Vorratsbehälter 8, 9, 72 sowie der wenigstens einen Materialauftragsvorrichtung 5 verbunden ist, dass das wenigstens eine Partikelmaterial 2, 3 in die wenigstens einen Materialauftragsvorrichtung 5 kontinuierlich förderbar ist, ohne dass die Bewegung der wenigstens einen Materialauftragsvorrichtung 5 am wenigsten einen Druckrahmen 4 unterbrochen werden muss.

Als Partikelmaterial können Schüttgüter jeglicher Art, wie z.B. Sand, zum Einsatz kommen. Das Partikelmaterial kann pulver-, granulat- oder faserförmig ausgebildet sein.

Als Bindemittel können ebenfalls unterschiedliche Stoffe zum Einsatz gelangen, wie z.B. Wassergläser, Phenolharze im Falle von Sand. Es könne auch 2-Komponenten-Binder verwendet werden. In diesem Fall bietet es sich an, dass eine anorganische Substanz, insbesondere ein Chlorid, über den Druckkopf abgegeben wird und eine damit zusammenwirkende Pulverkomponente, z.B. ein Metalloxid, dem Partikelmaterial beigefügt wird.

Die Fördervorrichtung 10 ist bevorzugt dazu ausgebildet, das wenigstens eine Partikelmaterial 2, 3 mechanisch und/oder pneumatisch zu fördern.

Die Vorteile einer pneumatischen Förderung bestehen darin, dass dadurch eine hohe Automatisierbarkeit, einfache Förderstromverzweigungen, ein geringer Wartungsaufwand, eine hohe Betriebssicherheit, eine flexible Ausgestaltung des Förderwegs und eine geringe Entmischung eines homogen vorgemischten Schüttguts realisierbar sind.

Im Falle der Figuren 1a) und 1b) umfassen die dargestellten Vorrichtungen einen Saugförderer.

Es bietet sich an, das Prinzip der Saugförderung dann zu verwenden, wenn eine begrenzte Förderkapazität, eine Förderung über mittellange Distanzen, eine Förderung leicht förderbarere Materialien und/oder eine Dosierung der Materialien benötigt wird. Die Saugförderung zeichnet sich insbesondere durch den Vorteil aus, dass Staubfreisetzungen im Wesentlichen vollständig vermieden werden können.

Es sind ein erster und ein zweiter Vorratsbehälter 8, 9 vorgesehen, wobei im ersten Vorratsbehälter 8 ein erstes Partikelmaterial 2 und im zweiten Vorratsbehälter 9 ein zweites Partikelmaterial 3 bevorratet ist. Es können auch nur ein Vorratsbehälter oder mehr als zwei Vorratsbehälter vorgesehen sein.

Die Fördervorrichtung 10 umfasst eine Materialweiche 14, über welche wechselweise das Partikelmaterial 2, 3 aus den beiden Vorratsbehältern 8, 9 zur Materialauftragsvorrichtung 5 förderbar ist.

Die Fördervorrichtung kann eine Mischvorrichtung zur Mischung von einem ersten Partikelmaterial 2 aus dem ersten Vorratsbehälter 8 und einem zweiten Partikelmaterial 3 aus dem zweiten Vorratsbehälter 9 umfassen.

Die Fördervorrichtung 10 kann wenigstens eine Dosiervorrichtung, vorzugsweise wenigstens eine Zellenradschleuse und/oder wenigstens eine Gewichtsmessdose, umfassen, mit welcher das das Partikelmaterial 2, 3 dem wenigstens einen Vorratsbehälter 8, 9, 72 dosiert entnehmbar ist.

Die Fördervorrichtung 10 ist über jeweils eine Aufgabestation 16 mit den Vorratsbehältern 8, 9 verbunden. Für den Fall, dass eine wenigstens eine Dosiervorrichtung vorgesehen ist, kann diese in die Aufgabestation 16 eingebaut sein, oder mit derselben zusammenwirken.

Die Fördervorrichtung 10 weist eine Ausgleichsvorrichtung 32 auf, mit welcher eine im Zuge des Druckvorgangs veränderte Länge der Förderstrecke ausgleichbar ist. Im konkret dargestellten Fall sind die Vorratsbehälter 8, 9 mit der Materialweiche 14 und der Materialauftragsvorrichtung 5 über Versorgungsleitungen 12 verbunden. Die Versorgungsleitungen 12 können rohr- oder schlauchförmig ausgebildet sein. Um eine Ausgleichsvorrichtung bereitzustellen, bietet es sich an, eine flexible Schlaufe od. dgl. in zumindest einer der vorgesehenen Versorgungsleitungen 12 vorzusehen.

Der Druckrahmen 4 kann eine Breite 33 von mehreren Metern aufweisen, über welche die wenigstens eine Materialauftragsvorrichtung 5 bewegbar ist. Bei einer solchen Breite ist eine Förderung des Partikelmaterials 2, 3 rein unter Ausnutzung der Schwerkraft nicht möglich. Außerdem ist dieses Förderprinzip zumindest für einige der zu fördernden Partikelmaterialien 2, 3 unzuverlässig, das das Partikelmaterial 2, 3 beispielsweise stecken bleibt.

Der Druckrahmen 4 kann in der Höhe, d.h. in die mit dem Bezugszeichen 20 bezeichneten Raumrichtung, verstellbar gelagert sein. Hierzu können, wie im konkret dargestellten Fall, Vertikalstege 51 vorgesehen sein.

Das von der Fördervorrichtung 10 in die Materialauftragsvorrichtung 5 beförderte Partikelmaterial 2, 3 gelangt in einen Aufgabetrog 48 und von dort beispielsweise über eine Dosierwalze 35 auf die aktuelle Arbeitsebene 76.

Die Materialauftragsvorrichtung 5 kann am Druckrahmen 4 durch beidseitig angeordnete Schrittmotoren und Kegelradgetriebe unter Verwendung des Systems Ritzer-Zahnstange realisiert werden. Alternative Antriebe können durch Zahnriemen mit Ritzel, Spindeln, Seilzügen, Linearmotoren und/oder Roboter realisiert werden.

Wie in der Figur 1b) angedeutet, kann eine Energiekette 11 vorgesehen sein, welche mit der wenigstens einen Materialauftragsvorrichtung 5 bewegungsgekoppelt verbunden ist, wobei die Fördervorrichtung 10 eine Versorgungsleitung 12 umfasst, welche in die wenigstens eine Energiekette 11 integriert ist. Die Energiekette 11 ist im konkret dargestellten Beispiel seitlich am Druckrahmen 4 angeordnet. Durch die Integration der Versorgungsleitung 12 in die Energiekette 11 kann Platz gespart werden.

Bevorzugt ist die Fördervorrichtung 10 permanent, und/oder, vorzugsweise in allen Raumrichtungen 18, 19, 20, bewegungsgekoppelt mit der Materialauftragsvorrichtung 5 verbunden.

Die Vorratsbehälter 8, 9 sind stationär und mit einem Abstand 34 zum Druckrahmen 4 angeordnet. Die Vorratsbehälter 8, 9 können austauschbar sein.

Figur 1c) zeigt einen Saugförderer 27, welcher bei der gegenständlichen Vorrichtung zum Einsatz kommen kann. Über eine Abluftleitung 78 wird ein Unterdruck erzeugt, wodurch Partikelmaterial 2, 3 über eine Versorgungsleitung 12 zu einem im Saugförderer 27 angeordneten Abscheider 77 gelangt. Eine Filtervorrichtung 26 sorgt dafür, dass kein Staub des Partikelmaterials 2, 3 in die Abluft gelangt. Das abgeschiedene Partikelmaterial 2, 3 wird durch eine Öffnung 101 an einer vorbestimmten Position, z.B. der Materialauftragsvorrichtung 5, abgegeben.

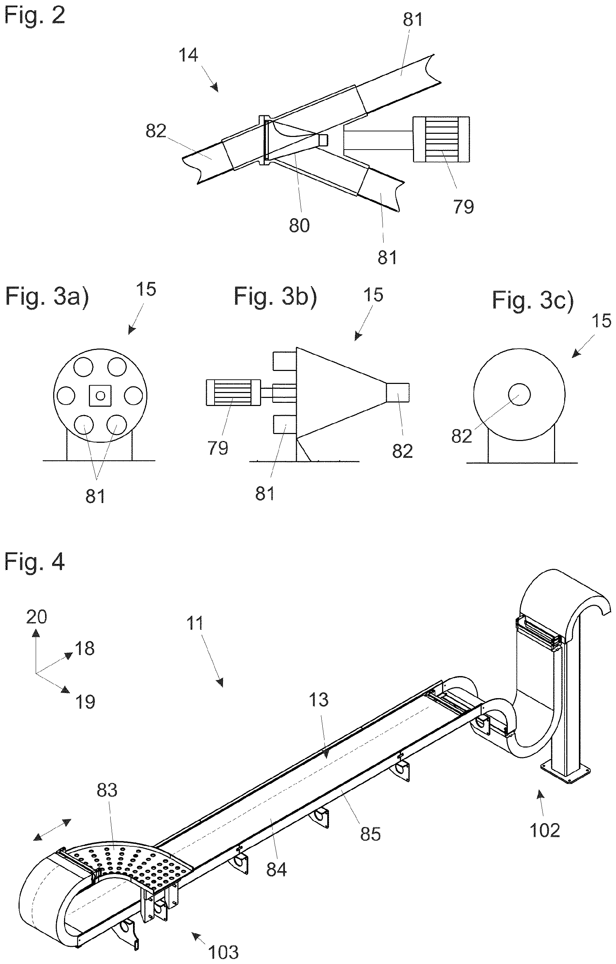

Figur 2 zeigt eine beispielhafte Ausgestaltung einer Materialweiche 14. Die Materialweiche 14 umfasst zwei Zuleitungen 81, welche z.B. jeweils über eine Versorgungsleitung 12 mit einem Vorratsbehälter 8, 9 verbunden sein können, und über welche Partikelmaterial 2, 3 zuführbar ist. Über ein Ablenkelement 80 kann das Partikelmaterial 2, 3 in eine Ableitung 82 gelangen, wobei das Ablenkelement 80 selektiv eine Weiterleitung eines aus einer Zuleitung 81 eintreffenden Partikelmaterials 2, 3 steuern kann. Das Ablenkelement 80 ist über ein Stellelement 79 betätigbar. Die Materialweiche 14 kann auch in umgekehrter Richtung eingesetzt werden, wobei die Zuleitungen 81 und die Ableitung 82 in ihrer Funktion vertauscht sind. Dadurch kann eintreffendes Partikelmaterial 2, 3 in zwei verschiedene Kanäle, welche z.B. auf der einen Seite des Druckrahmens 4 oder auf der gegenüberliegenden Seite des Druckrahmens 4 angeordnet sind, weitergeleitet werden.

In den Figuren 3a) bis 3c) ist eine weitere beispielhafte Ausgestaltung einer Materialweiche 15 dargestellt. Es handelt sich um eine 6-fach-Materialweiche mit sechs Zuleitungen 81 und einer Ableitung 82, oder umgekehrt.

Figur 4 zeigt eine beispielhafte Ausführung einer Energiekette 11, welche zur Versorgung des wenigstens einen Druckkopfs 6 und/oder der wenigstens einen Materialauftragsvorrichtung 5 verwendbar ist. Über die Energiekette 11 können gebündelt Kabel, Schläuche, Signalleitungen od. dgl. geführt werden. Die Energiekette 11 hat ein festes Ende 102 und ein bewegliches Ende 103, welches bewegungsgekoppelt mit dem wenigstens einen Druckkopf 6 und/oder der wenigstens einen Materialauftragsvorrichtung 5 verbunden sein kann. Am beweglichen Ende 103 kann wie im konkreten Fall dargestellt eine Umlenkung 83 angeordnet sein.

Die Kabel, Schläuche, Signalleitungen od. dgl. können von einer flexiblen Umhüllung 84 umschlossen sein, welche auf einem Trägergestell 85 ablegbar ist.

Die Energiekette 11 kann wenigstens einen räumlich abgetrennten Sektor 13 aufweisen, in welchem wenigstens eine Versorgungsleitung 12 für Partikelmaterial 2, 3 anordenbar ist. Das hat den Vorteil, dass die wenigstens eine Versorgungsleitung 12 der Energiekette 11 zu Wartungszwecken leicht entnehmbar ist.

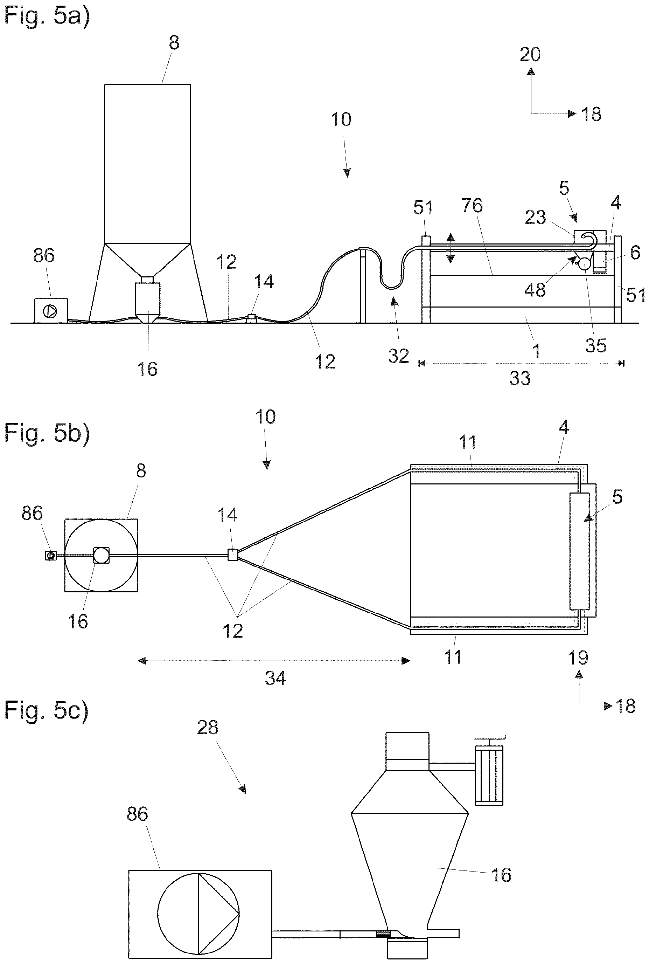

Die Figuren 5a) und 5b) zeigen Vorrichtungen zur Herstellung wenigstens eines dreidimensionalen Bauteils mit einer Fördervorrichtung 10, welche einen Druckförderer 28 umfasst. Figur 5c) zeigt eine beispielhafte Ausgestaltung eines Druckförderers 28.

Die Druckförderung zeichnet sich insbesondere durch eine hohe Förderkapazität, lange Förderwege, die Möglichkeit, auf andere Arten nur schwer zu fördernde Materialien, zu fördern und die Möglichkeit, verschiedene Materialien mit einer Fördervorrichtung zu fördern, aus.

Das Partikelmaterial 2 wird von einem Vorratsbehälter 8 in eine Aufgabestation 16 abgegeben und von dort mittels Druckluft zu einer Materialauftragungsvorrichtung 5 gefördert. Die zur Beförderung von Partikelmaterial 2 benötigte Druckluft kann über einen Kompressor 86 bereitgestellt werden.

Es kann, wie im konkret dargestellten Fall, eine Materialweiche 14 vorgesehen sein, welche eine Verzweigung bereitstellt, wodurch die Materialauftragungsvorrichtung 5 von gegenüberliegenden Seiten aus mit Partikelmaterial 2 beschickbar ist.

Es werden kontinuierlich und diskontinuierlich arbeitende Druckförderer 28 unterschieden. Bei diskontinuierlich arbeitenden Druckförderern 28 werden Pakete an Partikelmaterial 2 gefördert. Diese haben darüber hinaus den Vorteil, dass auf zusätzliche Schleuseneinheiten verzichtet werden kann, und dass hohe Förderdrücke von bis zu 6 bar und entsprechend hohe Förderleistungen erzielbar sind.

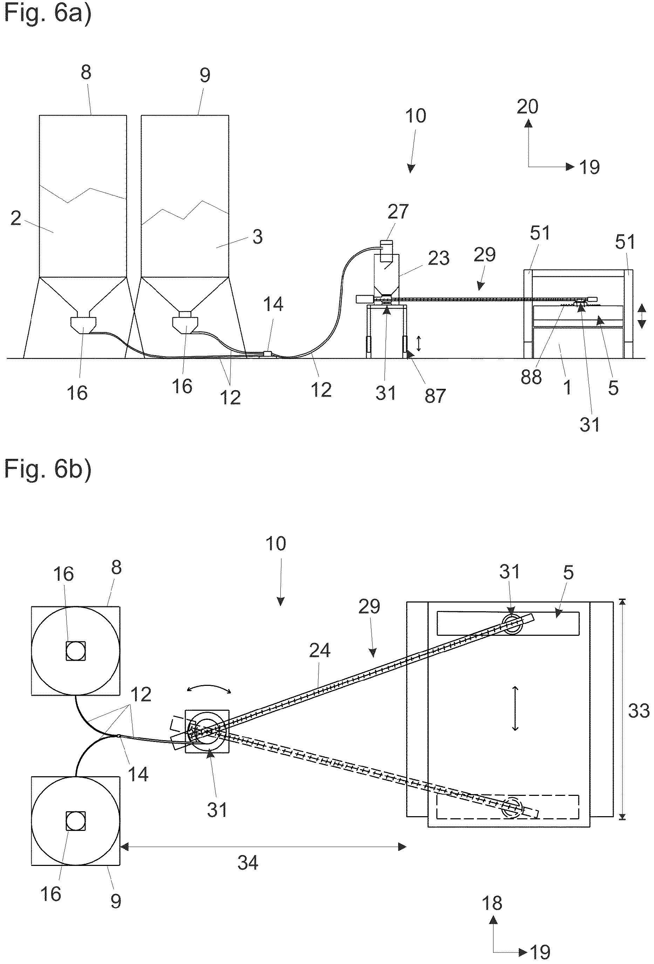

Die Figuren 6a) und 6b) zeigen Vorrichtungen zur Herstellung wenigstens eines dreidimensionalen Bauteils mit einer Fördervorrichtung 10, welche einen Schnecken- oder Spiralförderer 29 umfasst.

Schnecken- und Spiralförderer haben den Vorteil, dass der Energieverbrauch gering ist und große Partikelmaterialdichten gefördert werden können. Zudem gibt es keine Verstopfungsgefahr. Der Aufwand für Antrieb und Wartung ist gering. Durch die Möglichkeit, Materialien genau zu dosieren, eignen sich Schnecken- und Spiralförderer besonders für kleine Drucker. Förderschnecken und -spiralen können in verschiedensten Größen hergestellt werden, sodass die Fördervorrichtung der Größe des Druckers und dessen Materialbedarf gut angepasst werden kann. Die Förderung mittels Schnecken- und Spiralförderern hat ein breites Einsatzspektrum, das von gut fließenden Schüttgütern bis zu schwer fließenden Materialien reicht.

Der Schnecken- oder Spiralförderer 29 ist schwenkbar gelagert, wobei ein Ende des Schnecken- oder Spiralförderer 29 mit einer Materialauftragsvorrichtung 5 schwenkbar verbunden ist. In durchgezogenen und gestrichelten Linien sind beispielhaft zwei Stellungen der Materialauftragsvorrichtung 5 relativ zum Druckrahmen 4 dargestellt.

Beidseitig der Stelle, an welcher der Schnecken- oder Spiralförderer 29 mit der Materialauftragsvorrichtung 5 verbunden ist, kann ein Faltenbalg 88 angeordnet sein.

Das andere Ende des Schnecken- oder Spiralförderer 29 kann auf einer Hebebühne 87 angeordnet sein, um den Schnecken- oder Spiralförderer 29 entsprechend einer Änderung des Druckrahmens 4 in die Raumrichtung 20 zu verstellen.

Der Schnecken- oder Spiralförderer 29 kann über einen Saugförderer 27 mit Partikelmaterial 2, 3 aus Vorratsbehältern 8, 9 beschickt werden. Anstelle des Saugförderers 27 können auch andere Beschickungsvorrichtungen eingesetzt werden.

Die Verbindungsstellen des Schnecken- oder Spiralförderers 29 mit dem Saugförderer 27 und der Materialauftragsvorrichtung 5 stellen schwenkbar gelagerte Übergabestationen 31 dar.

Die Fördervorrichtung 10 ist also zumindest bereichsweise höhenverstellbar und schwenkbar gelagert.

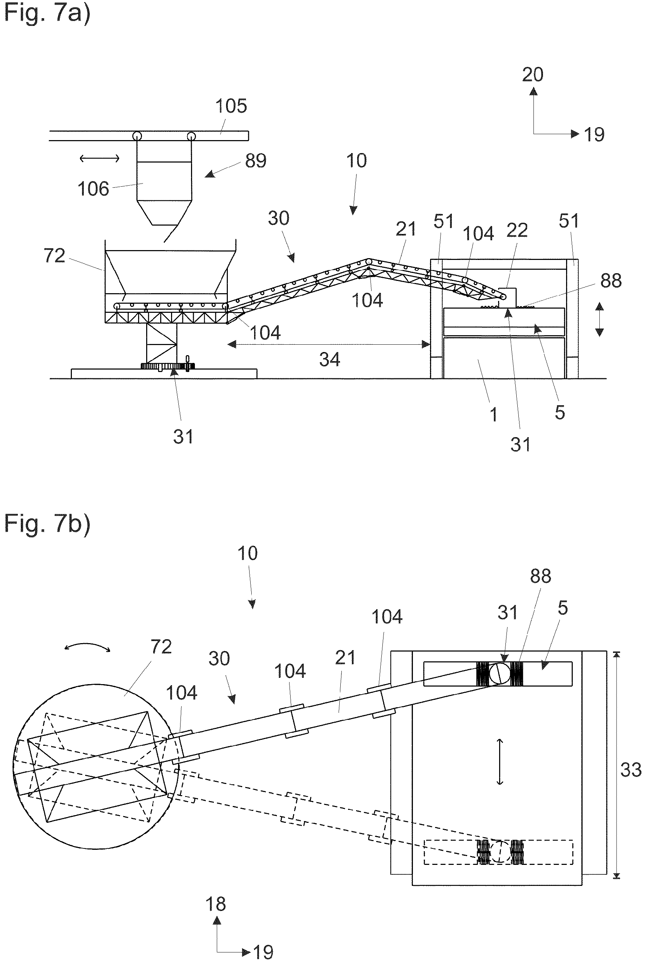

Die Figuren 7a) und 7b) zeigen Vorrichtungen zur Herstellung wenigstens eines dreidimensionalen Bauteils mit einer Fördervorrichtung 10, welche einen Bandförderer 30 umfasst.

Es bietet sich an, Bandförderer bei sehr großen Druckern einzusetzen, bei denen sehr große Massen an Rohmaterial gefördert werden müssen. Auch wird ein Bandförderer bei großen und schweren Partikelmaterialien eingesetzt. Vorteile von Bandförderern sind große Fördermengen und -geschwindigkeiten bei kleiner Antriebsleistung und schonendem Schüttguttransport. Auch ist eine gewisse Dosierung möglich, die für Großbauteile völlig ausreicht.

Der Bandförderer 30 ist schwenkbar gelagert und schwenkbar mit einer Materialauftragsvorrichtung 5 verbunden. Es ist ein Vorratsbehälter 72 vorgesehen, von welchem Partikelmaterial 2, 3 mittels des Bandförderers 30 in die Materialauftragsvorrichtung 5 förderbar ist.

Es kann, wie im konkret dargestellten Fall, eine Beschickungsvorrichtung 89 vorgesehen sein, über welche der Vorratsbehälter 72 mit Partikelmaterial 2, 3 beschickbar ist. Die Beschickungsvorrichtung 89 kann einen an einer Führung 105 bewegbar gelagerten Container 106 umfassen.

Der Bandförderer 30 umfasst mehrere Gelenke 104, über welche der Bandförderer 30 in die Raumrichtungen 19 und 20 verstellbar ist.

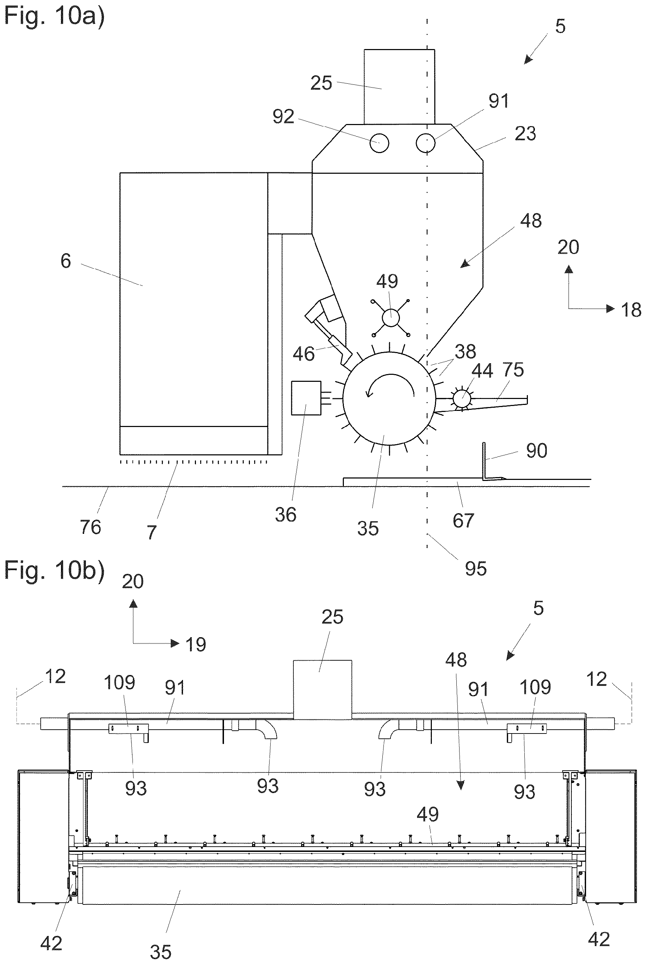

Bei allen dargestellten Vorrichtungen ist die Fördervorrichtung 10 im Wesentlich vollständig nach außen abgeschirmt ist, so dass das wenigstens eine Partikelmaterial 2, 3 vom wenigstens einen Vorratsbehälter 8, 9, 72 zur wenigstens einen Materialauftragsvorrichtung 5 im Wesentlich staubentwicklungsfrei förderbar ist. Zur Abschirmung können wenigstens eine Einhausung 21, 22 (vergleiche Figur 7a)), 23 (vergleiche z.B. Figur 1c)), 24 (vergleiche Figur 6b)), ein Luftvorhang, eine Absaugung und/oder eine Filtervorrichtung 25 (vergleiche Figur 10a)), 26 (vergleiche z.B. Figur 1c)) vorgesehen sein.

In ähnlicher Weise können auch andere Bereiche der Vorrichtung abgeschirmt sein, wie z.B. die Druckplattform 1, der Druckrahmen 4 mit der wenigstens einen Materialauftragsvorrichtung 5 und dem wenigstens einen Druckkopf 6, oder die gesamte Druckereinheit.

Die Vermeidung von Staubentwicklung ist für den Arbeitnehmerschutz sehr wichtig. Außerdem können dadurch der Verschleiß der Vorrichtungen reduziert und der gesamte Arbeitsbereich im Wesentlichen kontaminationsfrei gehalten werden. Und schließlich können auch Staubexplosionen, welche bei bestimmten Materialien entstehen können, vermieden werden. Durch die Abschirmung werden umgekehrt auch die für den Druckprozess verwendeten Materialien vor Verunreinigungen geschützt.

Die wenigstens eine Einhausung kann auch gedämmt sein und je nach klimatischen Erfordernissen beheizt oder gekühlt werden, um eine optimale Prozesstemperatur, die je nach Material unterschiedlich sein kann, zu gewährleisten.

Bei Bedarf ist die wenigstens eine Einhausung mit Schnellverschlüssen an den Wandenden schnell abbaubar und wieder aufbaubar. Die Einhausungselemente können getrennt voneinander abbaubar sein. Die wenigstens eine Einhausung kann mit Rädern versehen sein, über die man die gesamte Einhausung anheben und bereichsweise weg rollen kann. Die Einhausung kann mit mindestens einer Türe, mindestens einem seitlichen Sichtfenster für Sichtkontrollen, vorzugsweise an jeder Seite, und mindestens einem Rolltor versehen sein. Wird die Druckereinheit in eine Palettenumlaufanlage integriert, können zwei Rolltore vorgesehen sein. Seitlich zur Einhausung kann ein digitales, mobiles Steuerpult zur Steuerung des Druckprozesses angeordnet sein. In einer Seitenwand kann ein Flachbildschirm eingelassen sein, der die wichtigsten Prozessparameter anzeigt und den Druckfortschritt anzeigt.

Alternativ oder ergänzend zu einer Einhausung kann wenigstens ein Luftvorhang zum Einsatz kommen. Dabei erzeugt eine Vorrichtung einen Luftstrom, der die Umgebung, die sich vor dem Luftstrom befindet, vor einer Staubentwicklung schützt. Der Luftvorhang wird durch im Boden eingelassene Absaugöffnungen abgesaugt und der Staub einer Entsorgung zugeführt.

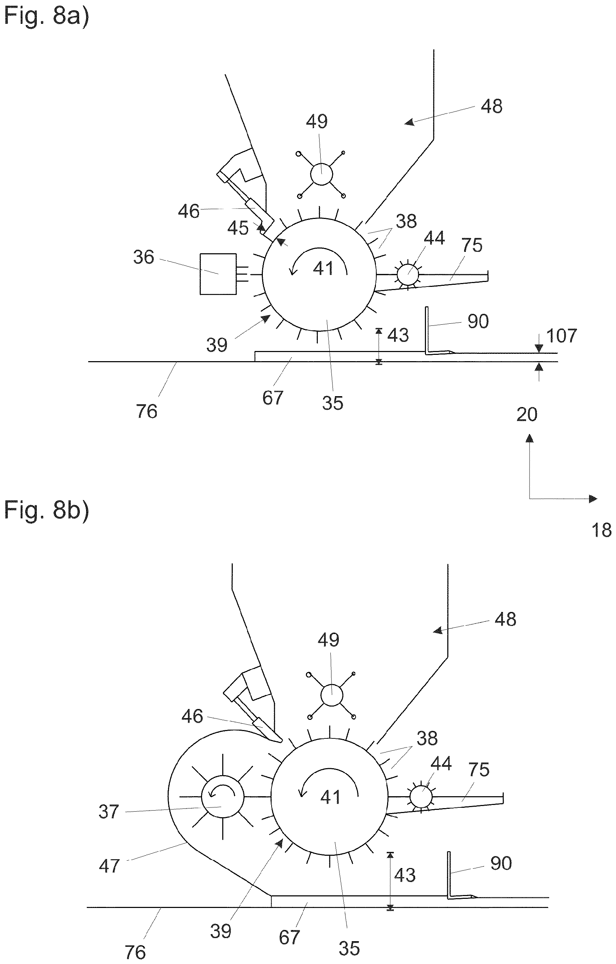

Die Figuren 8a) bis 8d) zeigen Ausschnitte von Materialauftragsvorrichtungen 5, welche jeweils wenigstens eine Dosierwalze 35 umfassen, über welche das wenigstens eine Partikelmaterial 2, 3 auf der Druckplattform 1 auftragbar ist.

Es ist jeweils wenigstens eine mechanische Entnahmevorrichtung 36, 37 vorgesehen, mit welcher das wenigstens eine von der wenigstens einen Dosierwalze 35 aufgenommene Partikelmaterial 2, 3 dosiert der wenigstens einen Dosierwalze 35 entnehmbar ist. Dadurch lässt sich die Gleichmäßigkeit des Materialauftrags im Vergleich zu einer Dosierwalze 35 ohne zusätzliche Entnahmevorrichtung weiter erhöhen.

Die wenigstens eine Entnahmevorrichtung 36, 37 kann rotierbar und/oder oszillierbar gelagert sein. Weiterhin kann die wenigstens eine Entnahmevorrichtung 36, 37 dazu ausgebildet sein, das wenigstens eine von der Dosierwalze 35 aufgenommene Partikelmaterial 2, 3 von der wenigstens einen Dosierwalze 35 zu bürsten, zu kratzen und/oder zu schaben.

Im Falle der in den Figuren 8a) und 8d) dargestellten Beispiele umfasst die Entnahmevorrichtung 36 eine oszillierbare Ausbürstvorrichtung, welche sich insbesondere zur Auftragung eines pulverförmigen Partikelmaterials 2, 3 eignet.

Die Geschwindigkeit der Bürste 36 ist abhängig von der Winkelgeschwindigkeit der Dosierwalze 35, kann aber wenn erforderlich auch frei eingestellt werden. Das Ausbürsten hat den Vorteil, dass das wenigstens eine Partikelmaterial 2, 3 gut durchmischt, vollständig aus den Nadeln oder Mulden herausgebürstet werden kann und somit gezielt und gleichmäßig auf der Arbeitsebene positioniert wird. Durch das Ausbürsten sind gegenüber Lösungen ohne Ausbürsteinrichtung wesentlich höhere Geschwindigkeiten und Mengen beim Auftragen des Schüttgutes erzielbar. Gleichzeitig findet weder eine Entmischung noch eine Haufenbildung statt.

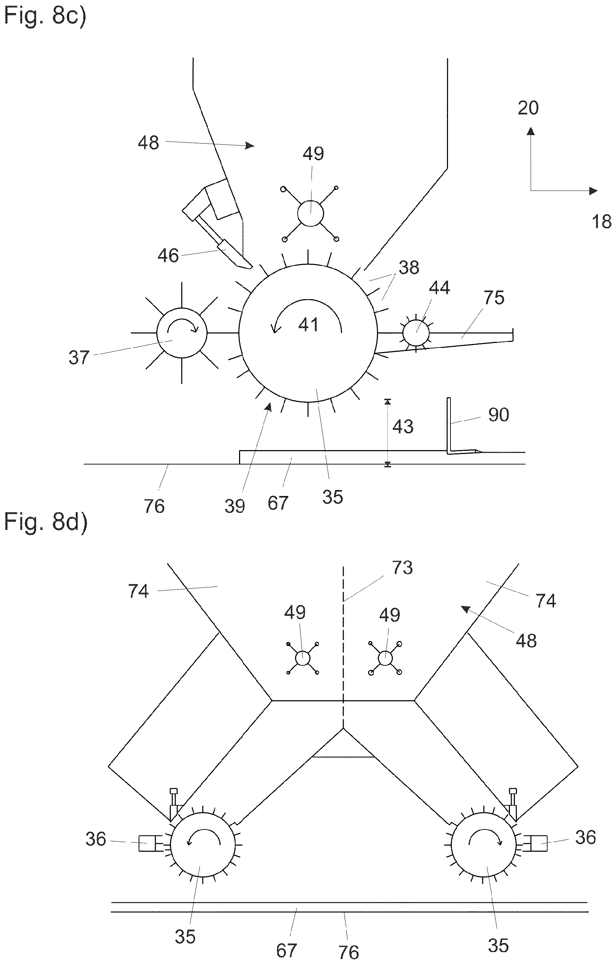

Im Falle der in den Figuren 8b) und 8c) dargestellten Beispiele umfasst die Entnahmevorrichtung 37 eine rotierbare Ausbürstvorrichtung, wobei die Ausbürstvorrichtung entweder gleichsinnig (vergleiche Figur 8b)) oder gegenläufig (vergleiche Figur 8c)) zur Dosierwalze 35 rotierbar ist. Die gleichsinnig rotierbare Entnahmevorrichtung 37 eignet sich insbesondere zur Auftragung eines granulatförmigen und die gegensinnig rotierbare Entnahmevorrichtung 37 zur Auftragung eines faserförmigen Partikelmaterials 2, 3. Insbesondere im Falle einer gleichsinnig rotierbaren Entnahmevorrichtung 37 bietet es sich, wie in Figur 8b) dargestellt, an, eine Materialablenkvorrichtung 47 im Bereich der Dosierwalze 35 vorzusehen. Dadurch ist das der Dosierwalze 35 entnommene Partikelmaterial gezielt auf der Druckplattform 1 auftragbar.

Die wenigstens eine Dosierwalze 35 kann im Inneren zumindest bereichsweise hohl ausgebildet sein, was vorteilhaft in Bezug auf einen Austausch einer ersten Dosierwalze 35 mit einer zweiten Dosierwalze 35, welche gegenüber der ersten Dosierwalze 35 geänderte Eigenschaften in Bezug auf die Dosierbarkeit des zu verarbeitenden Partikelmaterials 2, 3 aufweist, ist. Alternativ oder ergänzend kann der Austausch der Dosierwalze 35, wie in den dargestellten Fällen, durch das Vorsehen einer Führung 75 vereinfacht werden.

Die wenigstens eine Dosierwalze 35 kann, wie in den dargestellten Fällen, einen im Wesentlichen kreisförmigen oder vieleckigen, z.B. 16-eckigen, Querschnitt aufweisen.

Die wenigstens eine Dosierwalze 35 kann eine Reihe von, vorzugsweise periodisch angeordneten, Vertiefungen 38, in welchen das wenigstens eine Partikelmaterial 2, 3 anordenbar ist, und/oder eine, vorzugsweise periodisch, strukturierte Oberfläche 39 aufweist.

Die Formgestaltung der Walzenoberfläche 39 kann verschiedene Ausprägungen haben. Die Oberfläche 39 kann aus aufgeklebten Nadelmatten mit geraden oder schrägen Nadeln und/oder aufgeklebten bzw. aufgeschweißten oder gefrästen Noppen jeglicher Form und Größe oder aufgeschweißten oder gefrästen Lamellen jeder Form und Größe bestehen. Eine andere Möglichkeit der Oberflächengestaltung besteht im Fräsen von Löchern, Mulden und Schlitzen.

In den konkret dargestellten Fällen ist die wenigstens eine Dosierwalze 35 zumindest bereichsweise als Nadelwalze ausgebildet, wobei die wenigstens eine Dosierwalze 35 wenigstens ein austauschbares Nadelband aufweist. Letzteres hat den Vorteil, dass ein erstes Nadelband mit ersten Eigenschaften relativ einfach und kostengünstig durch ein zweites Nadelband mit von den ersten Eigenschaften abweichenden zweiten Eigenschaften ersetzt werden kann. Außerdem kann das erste Nadelband im Falle von Abnutzungserscheinungen, welche die Funktionsfähigkeit der Dosierwalze 35 beeinträchtigen, durch ein neues unbenutztes erstes Nadelband ersetzt werden. Diese Vorgänge können vor Ort durchgeführt werden, ohne dass die Dosierwalze 35 zum Hersteller transportiert werden muss.

Die Nadeln selbst können aus einem Metall oder Kunststoff bestehen. Der Abstand der Nadeln zueinander wird von der maximalen Korngröße sowie der Kornverteilung des Schüttgutes bestimmt. Die Nadellänge ist gemeinsam mit der Winkelgeschwindigkeit sowie dem Radius der wenigstens einen Dosierwalze 35 ein wichtiger Parameter für die Auftragsmenge an Partikelmaterial. Die Nadeln können senkrecht zur jeweiligen Tangente der Kreisoberfläche oder leicht geneigt zur Tangente angebracht werden.

Es ist eine Antriebsvorrichtung 40 vorgesehen, über welche die wenigstens eine Dosierwalze 35 antreibbar ist (vergleiche z.B. auch die Figur 12b)), vorzugsweise mit einer einstellbaren Winkelgeschwindigkeit 41. Über eine Änderung des Betrags der Winkelgeschwindigkeit 41 ist die Schichtdicke 107 der Schicht 67 einstellbar.

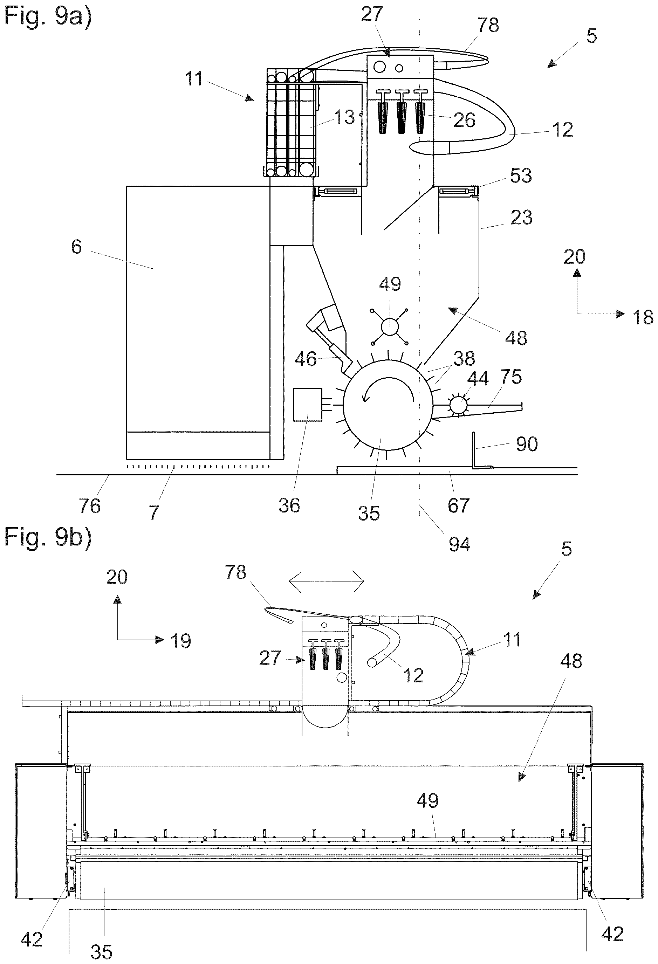

Weiterhin sind zwei endseitige Lagervorrichtungen 42 vorgesehen, an welchen die wenigstens eine Dosierwalze 35, vorzugsweise auswechselbar, drehbar gelagert ist (vergleiche z.B. auch die Figur 9b)). Dabei kann, wie in den dargestellten Fällen gemäß den Figuren 8a), 8b) und 8c), ein Abstand 43 der wenigstens einen Dosierwalze 35 zur Arbeitsebene 76 einstellbar sein.

In den dargestellten Fällen gemäß den Figuren 8a), 8b) und 8c) ist jeweils eine, walzenförmige Reinigungsvorrichtung 44 zur Säuberung der Dosierwalze 35 vorgesehen, wobei die Reinigungsvorrichtung 44 der Entnahmevorrichtung 36, 37 gegenüberliegend angeordnet ist. Mit Hilfe dieser Reinigungsvorrichtung 44 sind Reste des von der Dosierwalze 35 aufgenommenen Partikelmaterials 2, 3 entfernbar.

Des Weiteren ist in den dargestellten Fällen gemäß den Figuren 8a), 8b) und 8c) eine im Abstand 45 zur Dosierwalze 35 einstellbare Abstreifvorrichtung 46 zur Dosierung der Menge des von der Dosierwalze 35 aufgenommenen Partikelmaterials 2, 3 vorgesehen.

Die Materialauftragsvorrichtung 5 umfasst einen Aufgabetrog 48, aus welchem das wenigstens eine Partikelmaterial 2, 3 auf die wenigstens eine Dosierwalze 35 abgegeben wird, wobei die wenigstens eine Dosierwalze 35 in Gebrauchslage unterhalb des Aufgabetrogs 48 angeordnet ist.

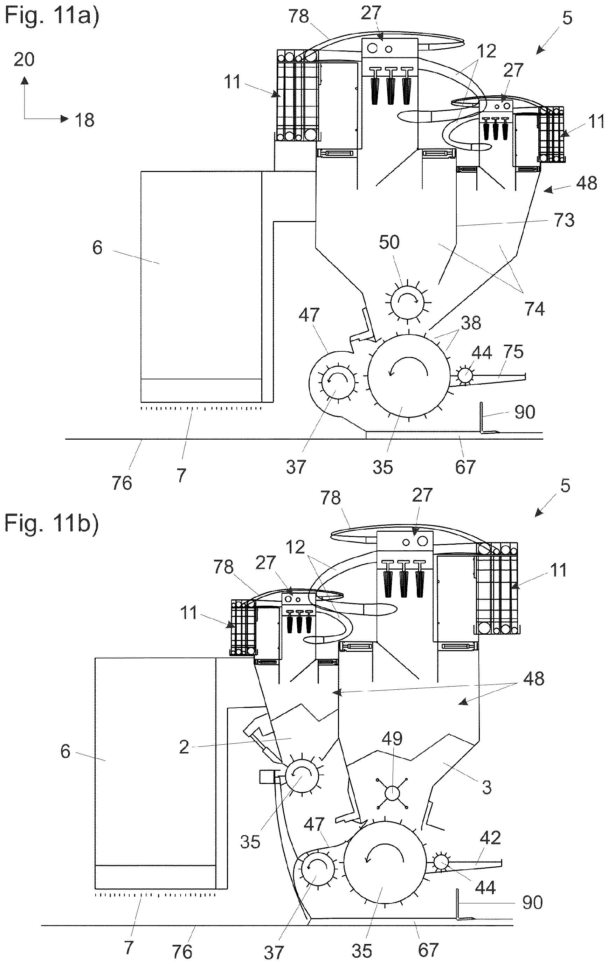

Im Aufgabetrog 48 kann wenigstens eine Brechwalze 49 (vergleiche z.B. Figur 8a)) und/oder Untermischwalze 50 (vergleiche z.B. Figur 11a)) angeordnet sein. Durch derartige Maßnahmen kann das der wenigstens einen Dosierwalze 35 zugeführte Material gezielt aufbereitet, z.B. homogenisiert, werden.

Brechwalzen 49 werden auch als "Brückenbrechwalzen" bezeichnet, da diese Walzen die Brückenbildung des Partikelmaterials 2, 3 im Aufgabetrog 48 verhindern und somit dazu beitragen, dass das Partikelmaterial 2, 3 gleichmäßig zur Dosierwalze 35 gefördert wird und keine Hohlräume im Partikelmaterial 2, 3, welches als Vorrat im Aufgabetrog 48 gespeichert ist, auftreten.

Alternativ oder ergänzende Maßnahmen, die Brückenbildung im Partikelmaterial 2, 3 zu verhindern, können darin bestehen, dass vibrationstechnische Austragshilfen (z.B. Vibrationspads) und/oder das Fluidisieren des Partikelmaterials 2, 3 über Luftauflockerungsdüsen oder Luftauflockerungsspots, welche aus hochporösen Sintermetall bestehen, aus denen Druckluft austreten kann, zum Einsatz kommen. Es bietet sich an, diese Austragshilfen überall dort zu verwenden, wo eine Brückenbrechwalze 49 nicht verwendet werden kann, z.B. bei einem beweglichen Aufgabetrog 48 mit angetriebenen Trennwänden 56. Durch die Austragshilfen ist es möglich, das Partikelmaterial 2, 3 selbst aus engen Sektionen 17, welche durch die Trennwände 56 gebildet werden, auf die Dosierwalze 35 ohne Brückenbildung aufzubringen.

Der wenigstens einen Dosierwalze 35 kann eine nachgeordnete Rakel 90 vorgesehen sein, mit welcher geringfügig die Schichtdicke 107 der von der wenigstens einen Dosierwalze 35 auf der aktuellen Arbeitsebene 76 aufgetragenen Schicht 67 änderbar ist. Außerdem lässt sich durch die Rakel 90 die Oberfläche der Schicht 67 glätten und/oder eine Verdichtung der Schicht 67 herbeiführen.

Im Bereich der wenigstens einen Dosierwalze 35 kann wenigstens eine, vorzugsweise mehrere, Absaugvorrichtung für bei der Auftragung des wenigstens einen Partikelmaterials 2, 3 sich bildenden Staub vorgesehen sein.

Figur 8d) zeigt einen Ausschnitt einer Materialauftragsvorrichtung 5 mit zwei hintereinander angeordneten Dosierwalzen 35.

Mit Hilfe einer derartigen Anordnung lässt sich die Menge eines in einem Durchgang auf die Druckplattform 1 auftragbaren Partikelmaterials 2 oder 3 verdoppeln.

Alternativ sind auch zwei unterschiedliche Partikelmaterialien 2 und 3 auftragbar. Dazu bietet es sich an, den Aufgabetrog 48, wie mittels einer gestrichelten Linie angedeutet, durch eine Trennwand 73, welche im Wesentlichen parallel zur ersten Raumrichtung 18 ausgerichtet ist, in zwei räumlich voneinander getrennte Sektionen 74 zu unterteilen, wobei in einer ersten Sektion 74 ein erstes Partikelmaterial 2 und in einer zweiten Sektion 74 ein zweites Partikelmaterial 3 angeordnet ist. Das in der ersten Sektion 74 angeordnete erste Partikelmaterial 2 ist einer ersten Dosierwalze 35 und das in der zweiten Sektion 74 angeordnete zweite Partikelmaterial 2 einer zweiten Dosierwalze 35 zuführbar.

Die zwei Dosierwalzen können, wie im dargestellten Fall der Figur 8d), hintereinander und/oder in der Höhe versetzt (vergleiche z.B. Figur 11a)) zueinander angeordnet sein.

Die Figuren 9a) und 9b) zeigen einen Druckkopf 6 in Kombination mit einer Materialauftragsvorrichtung 5 und einem Saugförderer 27.

Die Materialauftragsvorrichtung 5 ist im Bereich der Dosierwalze 35 wie in Figur 8a) dargestellt ausgebildet.

Die Materialauftragsvorrichtung 5 ist zumindest in eine erste Raumrichtung 18 am Druckrahmen 4 bewegbar gelagert, wobei die wenigstens eine Fördervorrichtung 10 wenigstens einen Verteiler in Form eines Saugförderers 27 umfasst, welcher zumindest quer zur ersten Raumrichtung 18 an der Materialauftragsvorrichtung 5 bewegbar gelagert ist, also in die Raumrichtung 19 (vergleiche auch den in der Figur 9b) im oberen Bereich eingezeichneten Doppelpfeil). Im konkreten Fall ist ein Antrieb 53 zur Verstellung des Verteilers 27 relativ zur Materialauftragsvorrichtung 5 vorgesehen. Dadurch, dass der Saugförderer 27 relativ zur Materialauftragsvorrichtung 5 bewegbar gelagert ist, kann das von der Fördervorrichtung 10 in die Materialauftragsvorrichtung 5 geförderte Partikelmaterial 2, 3 an unterschiedlichen Positionen der Materialauftragsvorrichtung 5, oder wenn die Materialauftragsvorrichtung 5 einen Aufgabetrog 48 umfasst, an unterschiedlichen Positionen des Aufgabetrogs 48 abgelagert werden.

Der Saugförderer 27 ist mit einer Versorgungsleitung 12, über welche das wenigstens eine Partikelmaterial 2, 3 zugeführt wird, und einer Abluftleitung 78 verbunden. Diese Leitungen 12, 78 sind in eine Energiekette 11 integriert.

Bei der in den Figuren 10a) und 10b) gezeigten Materialauftragsvorrichtung 5 wird Partikelmaterial 2, 3 über einen Druckförderer zugeführt.

Das Partikelmaterial 2, 3 gelangt über Einblasrohre 91, welche an Versorgungsleitungen 12 angeschlossen sind und an welchen Einblasöffnungen 93 angeordnet sind, in einen Aufgabetrog 48. Weiterhin sind eine Abluftfilter 25 und eine Abluftleitung 92 vorgesehen. An den Einblasrohren 91 können Leitbleche 109 angeordnet sein, mit denen der Förderstrom gezielt verlangsamt und in eine gewünschte Richtung gelenkt werden kann.

Die Versorgung des Aufgabetrogs 48 über beide Seiten hat den Vorteil, dass dieser gleichmäßig gefüllt wird. Dadurch reduziert sich der Materialverteilungsaufwand im Aufgabetrog 48.

Die Materialauftragsvorrichtung 5 ist wiederum im Bereich der Dosierwalze 35 wie in Figur 8a) dargestellt ausgebildet.

Die Materialauftragsvorrichtung 5 kann alternativ, sowohl was die in den Figuren 9a) und 9b) dargestellte Saugförderung als auch was die in den Figuren 10a) und 10b) dargestellte Druckförderung im Bereich der Dosierwalze 35 wie in den Figuren 8b), 8c) oder 8d) dargestellt ausgebildet sein. Im Falle einer Ausbildung gemäß Figur 8b) und Verwendung des Prinzips der Saugförderung können je nachdem, ob eine Trennwand 73 vorgesehen ist, oder nicht, zwei Saugförderer 27 (mit Trennwand 73) oder ein Saugförderer 27 (ohne Trennwand 73) zum Einsatz kommen.

Figur 11a) zeigt einen Druckkopf 6 in Kombination mit einer Materialauftragsvorrichtung 5, umfassend eine Trennwand 73 in Längsrichtung 19, also quer zur Raumrichtung 18, und eine Untermischwalze 50.

Die Trennwand 73 unterteilt den Aufgabetrog 48 in zwei Sektionen 74, welche jeweils über einen separaten Saugförderer 27 mit einem Partikelmaterial 2, 3 befüllt werden. Anders ausgedrückt ist eine Fördervorrichtung 10 vorgesehen, mit welcher wenigstens ein erstes Partikelmaterial 2 in einer ersten Sektion 74 und wenigstens ein zweites Partikelmaterial 3 in einer zweiten Sektion 74 des Aufgabetrogs 48 ablagerbar ist.

In einem Bereich, in welchem die Trennwand 73 endet und sich die beiden Sektionen 74 wieder vereinen, ist die Untermischwalze 50 angeordnet, wodurch eine Vermischung der Partikelmaterialien 2, 3 erfolgt. Die Untermischwalze 50 kann im Vergleich zur Dosierwalze 35 z.B. gegenläufig rotiert werden. Mit dieser Anordnung lässt sich also ein 2-Komponentenstreuer realisieren.

Figur 11b) zeigt einen Druckkopf 6 in Kombination mit einer Materialauftragsvorrichtung 5, umfassend zwei Aufgabetröge 48 mit jeweils einer Dosierwalze 35. In einen der Aufgabetröge 48 kann über eine Fördervorrichtung 10 ein erstes Partikelmaterial 3, z.B. eine Pulverkomponente, und in den anderen Aufgabetrog 48 ein zweites Partikelmaterial 2, z.B. eine Faserkomponente, abgelagert werden. Die Partikelmaterialien 2 und 3 vermischen sich auf der Arbeitsebene 76 miteinander. Auf diese Weise ist beispielsweise ein Pulver-Faserstreuer realisierbar.

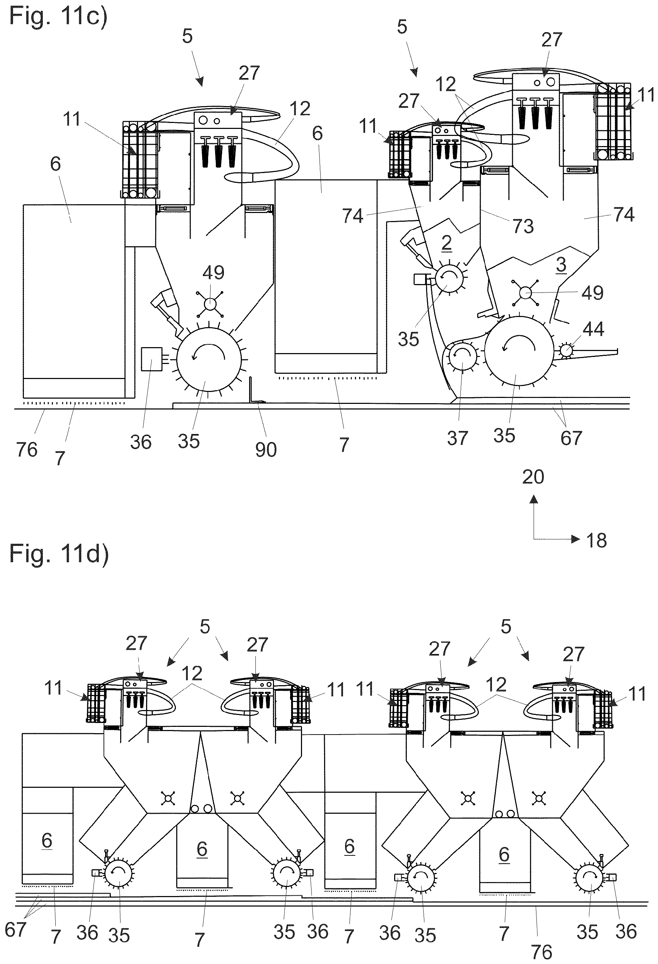

Die Figur 11c) zeigt eine Vorrichtung, gebildet aus den in Figuren 9a) und 11b) dargestellten Vorrichtungen. Diese Vorrichtung kann beispielsweise als Kombistreuer, zusammengesetzt aus einem Pulverstreuer und einem Pulver-Faserstreuer, verwendet werden.

Die Figur 11d) zeigt eine Vorrichtung, umfassend vier Druckköpfe 6 und vier Materialauftragsvorrichtungen 5 mit jeweils einem Saugförderer 27 und einer Dosierwalze 35. Diese Vorrichtung kann als eine Kombination aus Doppelstreuern abgesehen werden und stellt eine Art Linienfertiger dar.

Die Figuren 11a) bis d) illustrieren beispielhaft, dass die gegenständliche Vorrichtung zur Herstellung wenigstens eines dreidimensionalen Bauteils 71 für die Bauindustrie nach einem Baukastenprinzips, welches den Anforderungen des Endanwenders Rechnung trägt, zusammenstellbar ist.

Die Figuren 12a) bis c) und 13a) bis c) zeigen Materialauftragsvorrichtungen 5 zur schichtweisen Auftragung von wenigstens einem Partikelmaterial 2, 3 auf einer Druckplattform 1 für Vorrichtungen zur Herstellung wenigstens eines dreidimensionalen Bauteils 71 für die Bauindustrie aus einer Mehrzahl von auf der Druckplattform 1 übereinander angeordneter Schichten 67 aus dem wenigstens einen Partikelmaterial 2, 3, die in örtlich vorbestimmten Bereichen verfestigt und miteinander zum wenigstens einen dreidimensionalen Bauteil 71 verbunden sind, wobei die Vorrichtungen einen Druckrahmen 4 umfassen, an welchem die Materialauftragsvorrichtung 5 und wenigstens ein Druckkopf 6 zur Abgabe wenigstens eines Bindemittels 7 an den örtlich vorbestimmten Bereichen bewegbar zumindest in eine erste Raumrichtung 18 gelagert sind.

Die Materialauftragsvorrichtungen 5 umfassen jeweils einen Aufgabetrog 48, in welchem das wenigstens eine Partikelmaterial 2, 3 zwischenspeicherbar ist und aus welchem das wenigstens eine Partikelmaterial 2, 3 auf die Druckplattform 1 auftragbar ist. Im Aufgabetrog 48 ist wenigstens eine Trennwand 54, 55, 56 zur Unterteilung des Aufgabetrogs 48 in räumlich voneinander getrennte Sektionen 17 angeordnet, wobei die wenigstens eine Trennwand 54, 55, 56 zumindest quer zur ersten Raumrichtung 18 verstellbar ist.

Die Verstellbarkeit der wenigstens einen Trennwand 54, 55, 56 schafft die Voraussetzung dafür, wenigstens zwei quer zur ersten Raumrichtung 18 verstellbare Trennwände 54, 55, 56 vorzusehen, wobei der Abstand 66 der beiden Trennwände 54, 55, 56 auf die Breite 65 der Druckplattform 1 einstellbar ist, und/oder verstellbare Trennwände 54, 55, 56 vorzusehen, über welche die Streubreite 52 der wenigstens einen Dosierwalze 35 einstellbar ist. Damit sind die Vorteile verbunden, dass man den Bauraum in seiner Größe reduzieren kann (z.B. nur halbe Baubox), oder dass man den Bauraum mit mindestens 2 verschiedenen Materialien bedrucken kann.

Der Aufgabetrog 48 ist bei den in den Figuren 12a) bis c) und 13a) bis c) gezeigten Materialauftragsvorrichtungen 5 jeweils quer zur ersten Raumrichtung 18 verstellbar gelagert. Hierzu können, wie in den konkret dargestellten Fällen, Führungen 62 vorgesehen sein, entlang welchen der Aufgabetrog 48 verstellbar ist. Weiterhin ist wenigstens ein Antrieb 63 zur Verstellung des Aufgabetrogs 48 vorgesehen.

Durch die Verstellbarkeit des Aufgabetrogs 48 kann die Position, an welcher ein bestimmtes Partikelmaterial 2, 3 aus einer bestimmten Sektion 17 des Aufgabetrogs 48 auf die Druckplattform 1 bzw. die aktuelle Arbeitsebene 76 aufgetragen wird, verändert werden.

Der Aufgabetrog 48 weist jeweils eine Breite 64 auf, die größer als die Breite 65 der Druckplattform 1 ist. Durch diese Maßnahme ist es leichter möglich, vor allem Partikelmaterialien 2, 3, welche in Sektionen 17 in den Randbereichen des Aufgabetrogs 48 angeordnet sind, wieder in den Bereich der Dosierwalze 35 zu verschieben.

Es ist jeweils eine Fördervorrichtung 10 vorgesehen, welche derart mit der Materialauftragsvorrichtung 5 verbunden ist, dass das wenigstens eine Partikelmaterial 2, 3 an unterschiedlichen Positionen der Materialauftragsvorrichtung 5, genauer gesagt den räumlich voneinander getrennten Sektionen 17, ablagerbar ist.

Die Fördervorrichtung 10 umfasst wenigstens einen Verteiler 27, welcher zumindest quer zur ersten Raumrichtung 18 an der Materialauftragsvorrichtung 5 bewegbar gelagert ist, wobei ein Antrieb 53 zur Verstellung des wenigstens einen Verteilers 27 relativ zur Materialauftragsvorrichtung 5 vorgesehen ist.

Bei dem in den Figuren 12a) bis c) dargestellten Ausführungsbeispiel sind Trennwände 54 vorgesehen, welche im Wesentlichen normal zur ersten Raumrichtung 18 ausgerichtet sind. Die Trennwände 54 können vor einem durchzuführenden Druckvorgang an gewünschten Positionen des Aufgabetrogs 48 flexibel eingebaut werden.

Hierzu sind, wie in der Figur 12d) angedeutet, z.B. elektromagnetische Befestigungsvorrichtungen 57 vorgesehen, über welche die Trennwände 54 an unterschiedlichen Positionen am wenigstens einen Aufgabetrog 48 lösbar befestigbar sind.

Alternativ können, wie in den Figuren 12e) und f) gezeigt, z.B. auch Trennwände 55 eingesetzt werden, welche an einer rohrförmigen Führung 58 verstellbar und lösbar befestigbar sind.

Wie aus der Draufsicht der Figur 12c), in welcher ein beispielhaftes Druckbild 108 auf der Arbeitsebene 76 dargestellt ist, besonders gut hervorgeht, ist es möglich, unterschiedliche Partikelmaterialien 2, 3, welche in räumlich voneinander getrennten Sektionen 17 im Aufgabetrog 48 angeordnet sind, nebeneinander über eine Dosierwalze 35 auf der Druckplattform 1 aufzutragen. Die Breiten 68 der Bänder 69, 70 aus den Partikelmaterialien 2, 3 werden über eine Verstellung der Trennwände 54, 55 quer zur ersten Raumrichtung 18, d.h. in die Raumrichtung 19, vor dem Druck eingestellt.

Durch eine Verstellung des Aufgabetrogs 48 kann die Position oder Lage der Bänder 69, 70 innerhalb der Schicht 67, oder anders ausgedrückt zu den Rändern der Schicht 67, verändert werden, und zwar während des Druckvorgangs. Hierdurch kommt es zu einem Versatz 96 in die Raumrichtung 19 (vergleiche die vergrößerte exemplarische Darstellung des Druckbilds 108 aus dem Grenzbereich zwischen den Bändern 69 und 70). Eine vorgegebene Kurve 97 kann also steuerungstechnisch als Funktion abgefahren werden. Jedoch werden durch die Dosierwalze 35 die Partikelmaterialien 2, 3 theoretisch stufenartig gestreut, da sich die Trennwände 54 und die Achse der Dosierwalze 35 im rechten Winkel befinden. Die erzielte Genauigkeit bei der Streuung der Partikelmaterialien 2, 3 wird in den meisten Fällen ausreichend sein. Mit dieser Vorrichtung können gekrümmte mehrschichtige Bauteile mit konstanten Schichtdicken hergestellt werden.

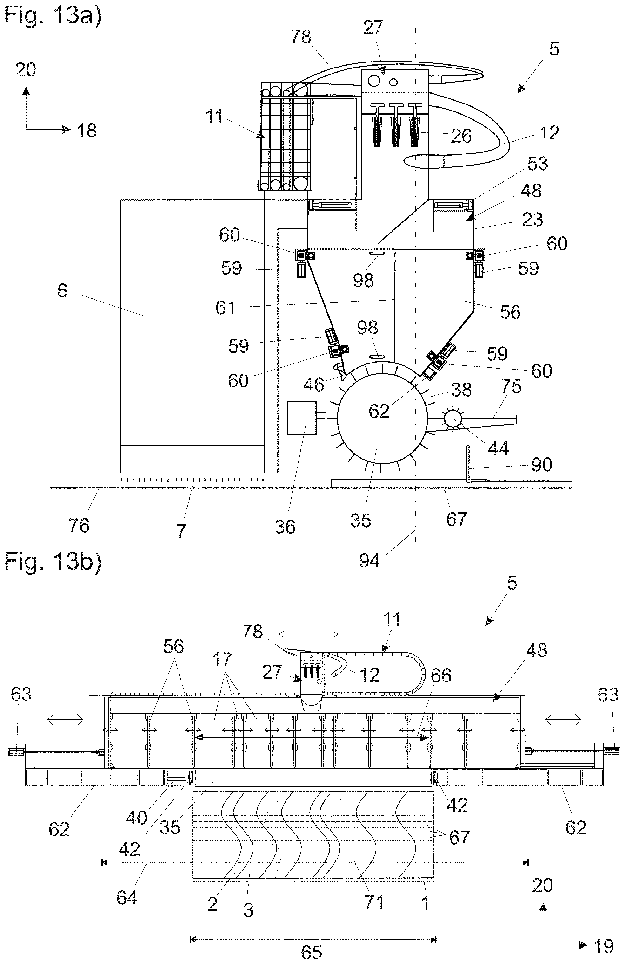

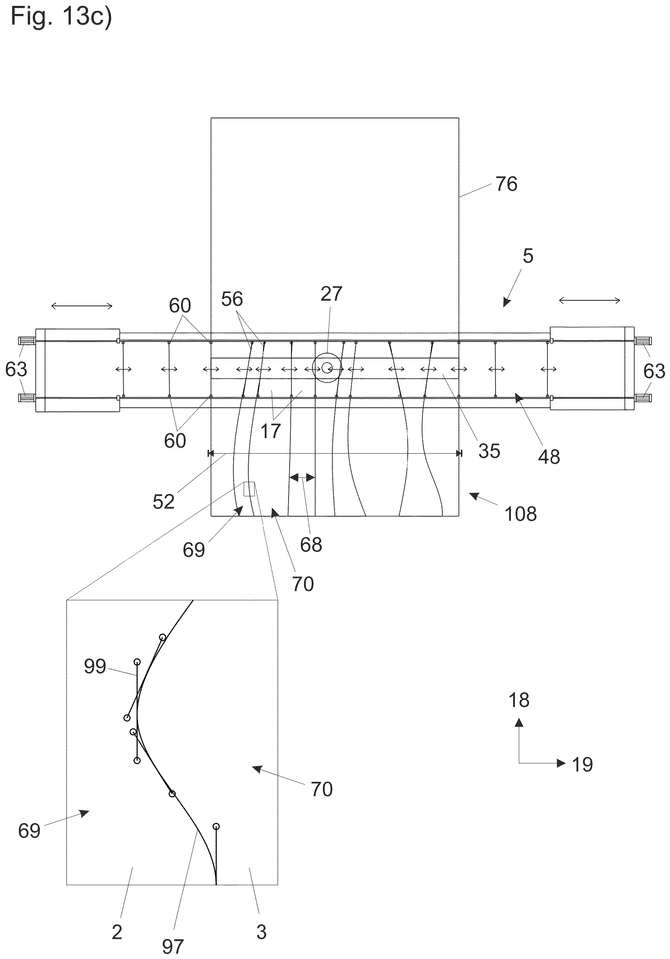

Im Vergleich zu dem in den Figuren 12a) bis c) dargestellten Ausführungsbeispiel können die bei dem in den Figuren 13a) bis c) dargestellten Ausführungsbeispiel Trennwände 56 zum Einsatz, welche über Antriebe 59 quer zur Raumrichtung 18 verstellbar sind. Dadurch ist es möglich, die Trennwände 56 auch während des Druckvorgangs zu verstellen und damit die Breiten 68 der Bänder 69, 70 während des Druckvorgangs zu verändern (vergleiche die Figur 13c)). Mit dieser Vorrichtung können somit auch Bauteile mit unterschiedlichen bzw. variablen Schichtdicken hergestellt werden.

Darüber hinaus sind die Trennwände 56 relativ zur ersten Raumrichtung 18 in eine Schrägstellung bringbar, wobei Gelenke 60, 61 vorgesehen sind, über welche die Trennwände 56 mit dem Aufgabetrog 48 verbunden sind (vergleiche Figur 13a)). Konkret sind einerseits an den Befestigungspunkten in den Ecken Gelenke 60 und andererseits in der Mitte ein Normalkraftgelenk 61, welches sich über den gesamten Querschnitt der Trennwand 56 erstreckt, vorgesehen. Mit dem Bezugszeichen 98 sind Führungen bezeichnet, welche zum Längenausgleich bei Schrägstellung der Trennwand 56 dienen.

Wie aus der Figur 13c) hervorgeht, lässt sich durch die Schrägstellung der Trennwände 56 das Druckbild 108 dahingehend optimieren, dass eine vorgegebene Kurvenfunktion 97 durch die Trennwände 56 in Form von Tangenten 99 angenähert wird. Dadurch können die in der Figur 12c) zu sehenden Stufen im Wesentlichen vermieden oder deutlich reduziert werden.

Mit den zuvor beschriebenen Vorrichtungen ist es möglich, ein Verfahren zur Herstellung wenigstens eines dreidimensionalen Bauteils 71 für die Bauindustrie durchzuführen, wobei auf einer Druckplattform 1 nacheinander Schichten 67 aus wenigstens einem Partikelmaterial 2, 3 übereinander angeordnet, in örtlich vorbestimmten Bereichen verfestigt und miteinander zum wenigstens einen dreidimensionalen Bauteil 71 verbunden werden, wobei wenigstens ein erstes Partikelmaterial 2 und ein zweites Partikelmaterial 3 gleichzeitig nebeneinander in einer Schicht 67 auf der Druckplattform 1 angeordnet werden.

Ein großer Vorteil dieses Verfahrens besteht darin, dass damit die Herstellung gradierter Bauteile ermöglicht wird. Unter gradierten Bauteilen versteht man Bauteile, welche eine kontinuierliche Eigenschaftsänderung im Querschnitt aufweisen. Die Materialkomposition wird gezielt den lokalen Anforderungen angepasst, was eine höhere Materialeffizienz ermöglicht.

Dabei kann es vorgesehen sein, dass die Breite 68 und/oder die Position eines aus dem ersten und/oder zweiten Partikelmaterial 2, 3 innerhalb einer Schicht 67 gebildeten Bands 69, 70, vorzugsweise während des Druckvorgangs, veränderbar ist.

Abschließend sei noch darauf hingewiesen, dass die Vorrichtung zur Herstellung wenigstens eines dreidimensionalen Bauteils 71 für die Bauindustrie wenigstens eine Steuerungsvorrichtung umfassen kann. Diese kann z.B. zur Steuerung des Förderns des wenigstens einen Partikelmaterials 2, 3 vom wenigstens einen Vorratsbehälter 8, 9, 72 zur wenigstens einen Materialauftragsvorrichtung 5 mittels der Fördervorrichtung 10, zur Verstellung der wenigstens einen Trennwand 56, und/oder zur Steuerung der Bewegung der wenigstens einen Dosierwalze 35 und der Bewegung einer gegebenenfalls vorgesehenen Entnahmevorrichtung 36, 37 herangezogen werden.

Im Falle der Steuerung des Förderns des wenigstens einen Partikelmaterials 2, 3 kann die Fördervorrichtung CAD/CAM-gesteuert die geometrischen Daten des herzustellenden dreidimensionalen Bauteils 71 in ein Steuerungsprogramm übertragen und die richtige Menge an Partikelmaterial 2, 3 mit hoher Genauigkeit in einen definierten Bereich des Aufgabetrogs 48 bringen. Die Steuerung ermittelt den individuellen Volumenbedarf an Partikelmaterial 2, 3 des jeweiligen Elements, rechnet ihn in Gewichtseinheiten um und vergleicht diesen Wert mit dem Materialaustrag, der beispielsweise über eine Gewichtsveränderung des Aufgabetrogs 48 gemessen wird. Der Aufgabetrog 48 kann hierzu auf Gewichtsmessdosen gelagert sein und den aktuellen Behälterinhalt kontinuierlich an die Steuerung melden.

Im Falle der Steuerung der Verstellung der wenigstens einen Trennwand 56 bietet es sich an, dass die Steuereinheit aus einem 3D- Modell über z.B. ein AMF-File die nötigen Daten entnimmt und es ermöglicht, im Zusammenspiel mit der Fördervorrichtung, Partikelmaterial 2, 3 an einem definierten Ort und in vorher durch das AMF-File definierter Menge abzulegen. Bei einem AMF-File handelt es sich um ein auf XML basiertes Format das von der American Society for Testing and Materials entwickelt wurde. Dieses Format kann zusätzlich zur Modellgeometrie auch Informationen zu Farbe und Art des Materials des zu druckenden Objekts enthalten.

## Patentansprüche

1. Vorrichtung zur Herstellung wenigstens eines dreidimensionalen Bauteils (71) für die Bauindustrie aus einer Mehrzahl von auf einer Druckplattform (1) übereinander angeordneter Schichten (67) aus wenigstens einem Partikelmaterial (2, 3), die in örtlich vorbestimmten Bereichen verfestigt und miteinander zum wenigstens einen dreidimensionalen Bauteil (71) verbunden sind, umfassend einen Druckrahmen (4), an welchem wenigstens eine Materialauftragsvorrichtung (5) zur schichtweisen Auftragung des wenigstens einen Partikelmaterials (2, 3) auf der Druckplattform (1) und wenigstens ein Druckkopf (6) zur Abgabe wenigstens eines Bindemittels (7) an den örtlich vorbestimmten Bereichen bewegbar gelagert sind, **dadurch gekennzeichnet, dass** die wenigstens eine Materialauftragsvorrichtung (5) wenigstens eine Dosierwalze (35) umfasst, über welche das wenigstens eine Partikelmaterial (2, 3) auf der Druckplattform (1) auftragbar ist, wobei wenigstens eine, vorzugsweise mechanische, Entnahmevorrichtung (36, 37) vorgesehen ist, mit welcher das wenigstens eine von der wenigstens einen Dosierwalze (35) aufgenommene Partikelmaterial (2, 3) dosiert der wenigstens einen Dosierwalze (35) entnehmbar ist.

2. Vorrichtung nach Anspruch 1, wobei die wenigstens eine Entnahmevorrichtung (36, 37) rotierbar und/oder oszillierbar gelagert ist, und/oder dazu ausgebildet ist, das wenigstens eine von der Dosierwalze (35) aufgenommene Partikelmaterial (2, 3) von der wenigstens einen Dosierwalze (35) zu bürsten, zu kratzen und/oder zu schaben.

3. Vorrichtung nach Anspruch 1 oder 2, wobei die wenigstens eine Dosierwalze (35)
- eine Reihe von, vorzugsweise periodisch angeordneten, Vertiefungen (38) aufweist, in welchen das wenigstens eine Partikelmaterial (2, 3) anordenbar ist, und/oder
- eine, vorzugsweise periodisch, strukturierte Oberfläche (39) aufweist, und/oder
- zumindest bereichsweise als Nadelwalze ausgebildet ist, vorzugsweise wobei die wenigstens eine Dosierwalze (35) wenigstens ein austauschbares Nadelband aufweist.

4. Vorrichtung nach einem der Ansprüche 1 bis 3, wobei die wenigstens eine Dosierwalze (35) im Inneren zumindest bereichsweise hohl ausgebildet ist, und/oder einen im Wesentlichen kreisförmigen oder vieleckigen Querschnitt aufweist.

5. Vorrichtung nach einem der Ansprüche 1 bis 4, wobei wenigstens eine Antriebsvorrichtung (40) vorgesehen ist, über welche die wenigstens eine Dosierwalze (35) antreibbar ist, vorzugsweise mit einer einstellbaren Winkelgeschwindigkeit (41).

6. Vorrichtung nach einem der Ansprüche 1 bis 5, wobei wenigstens eine Lagervorrichtung (42) vorgesehen ist, an welcher die wenigstens eine Dosierwalze (35), vorzugsweise auswechselbar, drehbar gelagert ist, vorzugsweise wobei ein Abstand (43) der wenigstens einen Dosierwalze (35) zu einer Arbeitsebene (76) einstellbar ist.

7. Vorrichtung nach einem der Ansprüche 1 bis 6, wobei wenigstens eine, vorzugsweise walzenförmige, Reinigungsvorrichtung (44) zur Säuberung der wenigstens einen Dosierwalze (35) vorgesehen ist, vorzugsweise wobei die wenigstens eine Reinigungsvorrichtung (44) einer gegebenenfalls vorgesehenen Entnahmevorrichtung (36, 37) gegenüberliegend angeordnet ist.

8. Vorrichtung nach einem der Ansprüche 1 bis 7, wobei wenigstens eine, vorzugsweise im Abstand (45) zur wenigstens einen Dosierwalze (35) einstellbare, Abstreifvorrichtung (46) zur Dosierung der Menge des von der wenigstens einen Dosierwalze (35) aufgenommenen Partikelmaterials (2, 3), und/oder wenigstens eine im Bereich der wenigstens einen Dosierwalze (35) angeordnete Materialablenkvorrichtung (47) vorgesehen ist.

9. Vorrichtung nach einem der Ansprüche 1 bis 8, wobei im Bereich der wenigstens einen Dosierwalze (35) wenigstens eine, vorzugsweise mehrere, Absaugvorrichtung für bei der Auftragung des wenigstens einen Partikelmaterials (2, 3) sich bildenden Staub vorgesehen ist.

10. Vorrichtung nach einem der Ansprüche 1 bis 9, wobei die wenigstens eine Materialauftragsvorrichtung (5) wenigstens einen Aufgabetrog (48) umfasst, aus welchem das wenigstens eine Partikelmaterial (2, 3) auf die wenigstens eine Dosierwalze (35) abgegeben wird, vorzugsweise wobei die wenigstens eine Dosierwalze (35) in Gebrauchslage unterhalb des wenigstens einen Aufgabetrogs (48) angeordnet ist.

11. Vorrichtung nach Anspruch 10, wobei
- im wenigstens einen Aufgabetrog (48) wenigstens eine Brechwalze (49) und/oder Untermischwalze (50) angeordnet ist, und/oder
- der wenigstens eine Aufgabetrog (48) mehrere räumlich voneinander getrennte Sektionen (17, 74) umfasst, in denen unterschiedliche Partikelmaterialien (2, 3) anordenbar sind, wobei die unterschiedlichen Partikelmaterialien (2, 3) nebeneinander über die wenigstens eine Dosierwalze (35) auf der Druckplattform (1) auftragbar sind, und/oder
- der wenigstens eine Aufgabetrog (48) verstellbare Trennwände (54, 55, 56) aufweist, über welche die Streubreite (52) der wenigstens einen Dosierwalze (35) einstellbar ist.

12. Vorrichtung nach einem der Ansprüche 1 bis 11, wobei die wenigstens eine Materialauftragsvorrichtung (5) wenigstens zwei hintereinander und/oder in der Höhe versetzt zueinander angeordnete Dosierwalzen (35) aufweist.

13. Vorrichtung nach einem der Ansprüche 1 bis 12, wobei eine Steuerungsvorrichtung zur Steuerung der Bewegung der wenigstens einen Dosierwalze (35) und der Bewegung einer gegebenenfalls vorgesehenen Entnahmevorrichtung (36, 37) vorgesehen ist.

14. Verfahren zur Auftragung von wenigstens einem Partikelmaterial (2, 3) auf einer Druckplattform (1) in einer Vorrichtung zur Herstellung wenigstens eines dreidimensionalen Bauteils (71) für die Bauindustrie gemäß einem der Ansprüche 1 bis 13, wobei in einem ersten Verfahrensschritt das wenigstens eine Partikelmaterial (2, 3) von der wenigstens einen Dosierwalze (35) aufgenommen wird, und in einem zweiten Verfahrensschritt mittels der wenigstens einen Entnahmevorrichtung (36, 37) dosiert der wenigstens einen Dosierwalze (35) entnommen und auf die Druckplattform (1) aufgetragen wird.

## Claims

1. Apparatus for producing at least one three-dimensional component (71) for the construction industry comprising a plurality of layers (67) arranged in mutually superposed relationship on a printing platform (1) and comprising at least one particle material (2, 3) and which are solidified in locally predetermined regions and are connected together to provide the at least one three-dimensional component (71), including a printing frame (4) on which at least one material application device (5) for layer-wise application of the at least one particle material (2, 3) on the printing platform (1) and at least one printing head (6) for the discharge of at least one binding agent (7) at the locally predetermined regions are moveably mounted, **characterised in that** the at least one material application device (5) includes at least one metering roller (35), by way of which the at least one particle material (2, 3) can be applied to the printing platform (1), wherein there is provided at least one, preferably mechanical, removal device (36, 37), with which the at least one particle material (2, 3) picked up by the at least one metering roller (35) is removable in metered fashion from the at least one metering roller (35).

2. Apparatus according to claim 1 wherein the at least one removal device (36, 37) is mounted rotatably and/or oscillatably and/or is adapted to brush, scrape and/or shave the at least one particle material (2, 3) picked up by the metering roller (35) from the at least one metering roller (35).

3. Apparatus according to claim 1 or claim 2 wherein the at least one metering roller (35)
- has a series of preferably periodically arranged depressions (38) in which the at least one particle material (2, 3) can be arranged, and/or
- has a surface (39) which is structured preferably periodically, and/or
- is at least region-wise in the form of a needle roller, preferably wherein the at least one metering roller (35) has at least one replaceable needle belt.

4. Apparatus according to one of claims 1 to 3 wherein the at least one metering roller (35) is at least region-wise hollow in its interior and/or is of a substantially circular or polygonal cross-section.

5. Apparatus according to one of claims 1 to 4 wherein there is provided at least one drive device (40), by way of which the at least one metering roller (35) is drivable, preferably at an adjustable angular speed (41).

6. Apparatus according to one of claims 1 to 5 wherein there is provided at least one mounting device (42) at which the at least one metering roller (35) is preferably replaceably rotatably mounted, preferably wherein a spacing (43) can be set for the at least one metering roller (35) relative to a working plane (76).

7. Apparatus according to one of claims 1 to 6 wherein there is provided at least one preferably roller-shaped cleaning device (44) for cleaning the at least one metering roller (35), preferably wherein the at least one cleaning device (44) is arranged opposite an optionally provided removal device (36, 37).

8. Apparatus according to one of claims 1 to 7 wherein there is provided at least one stripping device (46) which is preferably adjustable in the spacing (45) relative to the at least one metering roller (35) for metering the amount of the particle material (2, 3) which is picked up by the at least one metering roller (35) and/or at least one material deflection device (47) arranged in the region of the at least one metering roller (35).

9. Apparatus according to one of claims 1 to 8 wherein provided in the region of the at least one metering roller (35) is at least one and preferably a plurality of suction devices for dust which is formed upon application of the at least one particle material (2, 3).

10. Apparatus according to one of claims 1 to 9 wherein the at least one material application device (5) includes at least one feed trough (48), from which the at least one particle material (2, 3) is discharged on to the at least one metering roller (35), preferably wherein the at least one metering roller (35) in the position of use is arranged beneath the at least one feed trough (48).

11. Apparatus according to claim 10 wherein
- at least one crushing roller (49) and/or mixing-in roller (50) is arranged in the at least one feed trough (48), and/or
- the at least one feed trough (48) includes a plurality of spatially mutually separated sections (17, 74) in which different particle materials (2, 3) can be arranged, wherein the different particle materials (2, 3) can be applied on the printing platform (1) in mutually juxtaposed relationship by way of the at least one metering roller (35), and/or
- the at least one feed trough (48) has displaceable separating walls (54, 55, 56), by way of which the spreading width (52) of the at least one metering roller (35) is adjustable.

12. Apparatus according to one of claims 1 to 11 wherein the at least one material application device (5) has at least two metering rollers (35) which are arranged one behind the other or displaced relative to each other in height.

13. Apparatus according to one of claims 1 to 12 wherein there is provided a control device for controlling the movement of the at least one metering roller (35) and the movemen of an optionally provided removal device (36, 37).

14. A method of applying at least one particle material (2, 3) on a printing platform (1) in an apparatus for producing at least one three-dimensional component (71) for the construction industry according to one of claims 1 to 13 wherein in a first method step the at least one particle material (2, 3) is picked up by the at least one metering roller (35) and in a second method step removed in metered fashion from the at least one metering roller (35) by means of the at least one removal device (36, 37) and applied to the printing platform (1).

## Revendications

1. Dispositif de fabrication d'au moins un module tridimensionnel (71) pour l'industrie de la construction à partir d'une pluralité de couches (67) disposées l'une au-dessous de l'autre sur une plate-forme de pression (1) faites d'au moins un matériau particulaire (2, 3), lesquelles sont solidifiées dans des zones localement prédéfinies et sont reliées l'une à l'autre en au moins un module tridimensionnel (71), comprenant une armature (4), sur laquelle sont posés de manière mobile au moins un dispositif d'application de matériau (5) destiné à l'application par couches de l'au moins un matériau particulaire (2, 3) sur la plate-forme de pression (1) et au moins une tête de pression (6) destinée à distribuer au moins un liant (7) sur les zones localement prédéfinies, **caractérisé en ce que** l'au moins un dispositif d'application de matériau (5) comprend au moins un rouleau doseur (35), par le biais duquel l'au moins un matériau particulaire (2, 3) est applicable sur la plate-forme de pression (1), dans lequel au moins un dispositif de récupération (36, 37), de préférence mécanique, est prévu, avec lequel l'au moins un matériau particulaire (2, 3) accueilli par l'au moins un rouleau doseur (35) peut être extrait de l'au moins un rouleau doseur (35) de manière dosée.

2. Dispositif selon la revendication 1, dans lequel l'au moins un dispositif de récupération (36, 37) est disposé pour être en rotation et/ou oscillant, et/ou est réalisé de façon à brosser, gratter et/ou racler de l'au moins un rouleau doseur (35) l'au moins un matériau particulaire (2, 3) accueilli par le rouleau doseur (35).

3. Dispositif selon la revendication 1 ou 2, dans lequel l'au moins un rouleau doseur (35)
- comporte une série de dépressions (38), de préférence disposées de manière périodique, à l'intérieur desquelles l'au moins un matériau particulaire (2, 3) peut être disposé, et/ou
- comporte une surface (39) structurée, de préférence périodique, et/ou
- est réalisé au moins par sections comme rouleau à aiguilles, de préférence dans lequel l'au moins un rouleau doseur (35) comporte au moins une bande de pointes interchangeable.

4. Dispositif selon l'une des revendications 1 à 3, dans lequel l'au moins un rouleau doseur (35) est réalisé avec un intérieur creux au moins par sections, et/ou comporte une section sensiblement circulaire ou polygonale.

5. Dispositif selon l'une des revendications 1 à 4, dans lequel au moins un dispositif d'entraînement (40) est prévu, par le biais duquel l'au moins un rouleau doseur (35) peut être entraîné, de préférence avec une vitesse angulaire (41) réglable.

6. Dispositif selon l'une des revendications 1 à 5, dans lequel au moins un dispositif de palier (42) est prévu, sur lequel l'au moins un rouleau doseur (35) est disposé en rotation, de préférence de manière amovible, de préférence dans lequel une distance (43) entre l'au moins un rouleau doseur (35) et un plan de travail (76) est réglable.

7. Dispositif selon l'une des revendications 1 à 6, dans lequel au moins un dispositif de lavage (44), de préférence en forme de rouleau, est prévu pour le nettoyage de l'au moins un rouleau doseur (35), de préférence dans lequel l'au moins un dispositif de lavage (44) est disposé à l'opposé d'un dispositif de récupération (36, 37) éventuellement prévu.

8. Dispositif selon l'une des revendications 1 à 7, dans lequel au moins un dispositif racleur (46), de préférence à distance (45) réglable par rapport à l'au moins un rouleau doseur (35), est prévu pour le dosage de la quantité du matériau particulaire (2, 3) accueilli par l'au moins un rouleau doseur (35) et/ou au moins un dispositif de déviation de matériau (47) disposé dans la zone de l'au moins un rouleau doseur (35) est prévu.

9. Dispositif selon l'une des revendications 1 à 8, dans lequel dans la zone de l'au moins un rouleau doseur (35) au moins un, de préférence plusieurs, dispositif d'aspiration est prévu pour la poussière se formant lors de l'application de l'au moins un matériau particulaire (2, 3).

10. Dispositif selon l'une des revendications 1 à 9, dans lequel l'au moins un dispositif d'application de matériau (5) comprend au moins un bac d'alimentation (48), depuis lequel l'au moins un matériau particulaire (2, 3) est distribué sur l'au moins un rouleau doseur (35), de préférence dans lequel l'au moins un rouleau doseur (35) est disposé en-dessous de l'au moins un bac d'alimentation (48) en position d'utilisation.

11. Dispositif selon la revendication 10, dans lequel
- au moins un rouleau broyeur (49) et/ou un rouleau d'incorporation (50) est disposé dans l'au moins un bac d'alimentation (48), et/ou
- l'au moins un bac d'alimentation (48) comprend plusieurs sections (17, 74) séparées spatialement l'une de l'autre, à l'intérieur desquelles différents matériaux particulaires (2, 3) peuvent être disposés, dans lequel les différents matériaux particulaires (2, 3) sont applicables l'un à côté de l'autre sur la plate-forme de pression (1) par le biais de l'au moins un rouleau doseur (35) et/ou
- l'au moins un bac d'alimentation (48) comporte des parois de séparation ajustables (54, 55, 56), par le biais desquelles la largeur de dispersion (52) de l'au moins un rouleau doseur (35) est réglable.

12. Dispositif selon l'une des revendications 1 à 11, dans lequel l'au moins un dispositif d'application de matériau (5) comporte au moins deux rouleaux doseurs (35) disposés l'un derrière l'autre et/ou décalés l'un par rapport à l'autre dans la hauteur.

13. Dispositif selon l'une des revendications 1 à 12, dans lequel est prévu un dispositif de commande destiné à commander le mouvement de l'au moins un rouleau doseur (35) et le mouvement d'un dispositif de récupération (36, 37) éventuellement prévu.

14. Procédé d'application d'au moins un matériau particulaire (2, 3) sur une plate-forme de pression (1) dans un dispositif de fabrication d'au moins un module tridimensionnel (71) pour l'industrie de la construction selon l'une des revendications 1 à 13, dans lequel dans une première étape de procédé l'au moins un matériau particulaire (2, 3) est accueilli par l'au moins un rouleau doseur (35), et dans une deuxième étape de procédé est extrait de l'au moins un rouleau doseur (35) de manière dosée au moyen d'un dispositif de récupération (36, 37) et est appliqué sur la plate-forme de pression.
